# EUROPEAN PATENT SPECIFICATION

(11) **EP 4 329 664 B1**
(45) Date of publication and mention of the grant of the patent: **15.10.2025**
(21) Application number: 22725444.8
(22) Date of filing: 25.04.2022
(51) Int. Cl.: A61C 1/00, A61C 3/03, A61C 17/20

(54) **TIP FOR A VIBRATING SCALER AND A VIBRATING SCALER**
SPITZE FÜR EINEN VIBRATIONSZAHNSTEINENTFERNER UND VIBRATIONSZAHNSTEINENTFERNER
POINTE POUR DÉTARTREUR VIBRANT ET DÉTARTREUR VIBRANT

(30) Priority: 26.04.2021 GB 202105926; 26.04.2021 GB 202105927; 26.04.2021 GB 202105930
(43) Date of publication of application: 06.03.2024
(73) Proprietor: King's College London, London WC2R 2LS (GB)
(72) Inventor: FENLON, Michael, London SE1 9RT (GB); MCCARTHY, Claire, London SE1 9RT (GB); ERKEL, Hasan Erinc, London NW9 8DE (GB)
(74) Representative: Greaves Brewster LLP
(86) International application number: PCT/EP2022/060904
(87) International publication number: WO 2022/229104

(56) References cited:
- EP-A1- 1 180 350
- EP-A1- 3 705 083
- WO-A1-2006/092376
- DE-A1- 19 952 801
- US-A1- 2004 185 412
- US-A1- 2021 369 590
- US-B2- 7 927 505

## Description

### TECHNICAL FIELD

This invention relates to improvements in dentistry, more particularly to a tip for a vibrating scaler which helps to prevent or reduce aerosol generation during dental procedures.

### BACKGROUND

A document in the art is exemplified by EP1180350A1.

Repeated exposure to micro-organisms present in blood and saliva during aerosol-generating procedures (AGP's) places the dental professional at risk for developing infectious diseases and occupational acquired respiratory conditions (King et al 1997, Bennett 2000, Szymanska 2007, Reddy et al 2015). The transmission of SARS-CoV-2 via aerosolization of airborne droplets of <5µm has been identified as a potential risk (Peng et al, 2020) arising from common medical and dental procedures (Public Health England, 2020). Dentists, dental hygienists, and dental therapists together with dental nurses are in the highest risk category of COVID-19 due to the physical proximity to the oral cavity during aerosol and non-aerosol generating procedures with the average distance of the operator eyes to oral the cavity measuring just 35-40cm (Pirvu et al, 2014).

There are numerous potential sources of airborne contamination during dental treatment: dental instrumentation, saliva and respiratory sources, and the operative site. Most dental procedures require the use of rotary or ultrasonic devices that produce airborne particles from the site where the instrument is used. The atomised particles create a fine mist or cloud, referred to as aerosol, that poses a serious risk (Meng, 2020) to dental personnel and patients. Fine particles, those measuring <10µm in diameter are of most concern and carry the greatest risk due to their size, prolonged suspension in the air and ability access the nostrils, mouth, eyes, and skin and penetrate the respiratory system (Harrel & Molinari, 2004).

Aerosol-generating devices commonly used are highspeed handpieces that operate at ~400,000 revolutions per minute for cutting teeth and caries removal, and ultrasonic scalers (frequency range of 27-40KHz) that are used for the disruption and removal of oral biofilm and calculus in the treatment of periodontal disease. These devices rely on water as a coolant and when mixed with air, the water is atomised into a fine mist of particles and droplets of varying size and velocity. These devices can entrain potentially infected body fluids and debris within the aerosol created. Ultrasonic procedures generate the greatest aerosol, followed closely by highspeed air-turbines (Veena et al 2015, Bennett et al 2000). It is for this reason that the use of devices creating fine aerosol particles <10um are currently restricted and avoided and classed according to risk and aerosol production during the Sars-Cov2 pandemic by regulatory bodies.

Recent work confirms that contaminated aerosol and splatter, as result of both procedures is highest closest to the source (within 2m) but may also travel considerable distances from the source (low levels detected at 4m) and beyond the confines of the clinical area (Allison et al 2020) contaminating surfaces remote from the immediate area where treatment is being carried out.

Splatter (also referred to as "spatter") is a much larger particle, 50µm or more in diameter and exits the source in a trajectory manner and stops when it encounters a surface or falls to the ground. The trajectory is akin to the ballistic manner of a fired bullet. Splatter is a mixture of air, contaminated water, and bodily fluids are found in particles between 50µm to several millimetres in diameter. These larger and heavier splatter particles do not stay suspended in the air for as long as smaller particles <10µm diameter and are less of a problem.

As a result of Covid-19 dental infection risk, access to many dental treatments has been limited, with aerosol generating procedures only undertaken when deemed essential, resulting in postponed appointments, delayed treatment and progression of odontogenic infections, pain, and extractions of teeth that in normal circumstances would have been salvageable. Furthermore, the current common practice of prescribing antibiotics in lieu of appropriate treatment is of limited short-term benefit for patients and may have long term ramifications for antimicrobial resistance. Despite initiatives to recommence normal dental services, the cost and availability of PPE, as well as fallow and decontamination times have become limiting factors, disproportionately affecting primary care practices (Izzetti et al, 2020).

Solutions which permit the safe practice of dentistry, particularly using rotary and ultrasonic instrumentation, are therefore required.

### SUMMARY OF THE INVENTION

The present disclosure provides a method of cooling a device for use in dentistry, the method comprising delivering a coolant to a working end of the device, the coolant comprising a Newtonian fluid having a viscosity greater than water. Said method is not part of the claimed subject-matter.

The present disclosure also provides a method of cooling a device for use in dentistry, the method comprising delivering a coolant to a working end of the device, the coolant comprising glycerine. Said method is not part of the claimed subject-matter.

The present disclosure also provides a coolant for use in a method of cooling a device for use in dentistry, the method comprising delivering the coolant to a working end of the device, the coolant comprising a Newtonian fluid having a viscosity greater than water. Said coolant is not part of the claimed subject-matter.

The present disclosure also provides a coolant for use in a method of cooling a device for use in dentistry, the method comprising delivering the coolant to a working end of the device, the coolant comprising glycerine. Said coolant is not part of the claimed subject-matter.

The present disclosure also provides a coolant for cooling a device for use in dentistry, the coolant comprising a Newtonian fluid having a viscosity greater than water. Said coolant is not part of the claimed subject-matter.

The present disclosure also provides a coolant for cooling a device for use in dentistry, the coolant comprising glycerine. Said coolant is not part of the claimed subject-matter.

The present disclosure also provides an apparatus for use in dentistry, the apparatus comprising a coolant reservoir comprising a coolant as hereinbefore described, and a device connected to the coolant reservoir for delivery of coolant to a working end of the device to cool the device. Said apparatus is not part of the claimed subject-matter.

The present disclosure also provides a kit for use in dentistry, the kit comprising a coolant as hereinbefore described, and a device for use in dentistry. Said kit is not part of the claimed subject-matter.

The present disclosure also provides a coupling for connecting an alternative liquid coolant to a handpiece for use in dentistry, the coupling comprising:
an inlet interface for receiving resource connections from a dentistry base unit, the resource connections including a first liquid coolant connection; and
an outlet interface in communication with the inlet interface for passing on at least a subset of the resource connections to the handpiece,
wherein the coupling comprises an auxiliary inlet for receiving an alternative liquid coolant connection, the auxiliary inlet being communicable with the outlet interface to pass on the alternative liquid coolant connection via the outlet interface to the handpiece in place of the first liquid coolant connection. Said coupling is not part of the claimed subject-matter.

The present disclosure also provides an apparatus for use in dentistry, the apparatus comprising a first coolant reservoir comprising a first liquid coolant, an alternative coolant reservoir comprising an alternative liquid coolant different from the first liquid coolant, and a handpiece, wherein the handpiece is connected to the first coolant reservoir and the alternative coolant reservoir via a coupling as hereinbefore described. Said apparatus is not part of the claimed subject-matter.

The present disclosure also provides an apparatus for use in dentistry comprising:
a first coolant reservoir comprising a first liquid coolant having a first viscosity;
a second coolant reservoir comprising a second liquid coolant having a second viscosity different from the first viscosity; and
at least one handpiece connected to each coolant reservoir. Said apparatus is not part of the claimed subject-matter.

The present disclosure also provides an apparatus for use in dentistry comprising:
a first coolant reservoir comprising a first liquid coolant comprising water;
a second coolant reservoir comprising a second liquid coolant comprising glycerine, wherein the first liquid coolant is different from the second liquid coolant; and
at least one handpiece connected to each coolant reservoir. Said apparatus is not part of the claimed subject-matter.

The present invention provides a tip for a vibrating scaler for use in dentistry, the tip comprising:
a proximal inlet for receiving coolant;
a distal working portion for being vibrated to aid scaling; and
an outlet for delivering coolant received via the inlet to cool the working portion,
wherein the working portion defines a concave side and a convex side of the tip and the outlet is located on the convex side of the tip.

The present invention also provides a vibrating scaler for use in dentistry, comprising a scaler handpiece connected to a tip as hereinbefore described.

### BRIEF DESCRIPTION OF THE DRAWINGS

One or more embodiments of the invention will now be described, by way of example only, with reference to the accompanying drawings, in which:
Figure 1 is a series of diagrammatic depictions of dental units. Figure 1A shows a standard prior art dental unit. Figure 1B shows a first modified dental unit with self-contained ultrasonic scaler and one modified coupling (shown in greater detail in the inset). Figure 1C shows a second modified dental unit with integrated ultrasonic scaler and two modified couplings.
Figure 2 is a series of diagrammatic depictions of modified couplings. Figure 2A depicts a first modified coupling. Figure 2B depicts a second modified coupling with control unit.
Figure 3 is a series of diagrammatic depictions of a modified tip for an ultrasonic scaler. Figure 3A depicts the modified tip. Figures 3B and 3C show the modified tip in use.
Figure 4 is a series of depictions of the experimental rig utilised in the examples set out below. Figure 4A is a diagrammatic representation of the experimental rig. Figure 4B is a photograph of the experimental rig.
Figure 5 is a photograph of ultrasonic scaler tips used in the examples set out below. The left-hand tip is a 2U tip, the middle tip is a 1P tip and the right-hand tip is a modified tip.
Figure 6 is two still images showing experimental results for a 1p ultrasonic scaler tip in a non-contact position with water coolant (Figure 6A) and modified coolant (Figure 6B), as described in example 1 below.
Figure 7 is a series of stills taken from recordings of experimental results for a 1p ultrasonic scaler tip and modified tip in close proximity to a simulated tooth surface as described in example 1 below. Figure 7A shows the result for the 1p tip with water as coolant. Figure 7B shows the result for the 1p tip with modified coolant. Figure 7C shows the result for the modified tip with modified coolant.
Figure 8 is two still images showing experimental results for a 1p ultrasonic scaler tip in contact with a simulated tooth surface with water coolant (Figure 8A) and modified coolant (Figure 8B), as described in example 1 below.
Figure 9 is a series of stills taken from recordings of experimental results for a highspeed handpiece in a non-contact position, as described in example 1 below. Figure 9A shows the result with water as coolant. Figure 9B shows the result with modified coolant. Figure 9C shows the result with modified coolant with the handpiece in an upside down position.
Figure 10 is two stills taken from recordings of experimental results for a highspeed handpiece in close proximity to a simulated tooth surface as described in example 1 below with water (Figure 10A) and modified coolant (Figure 10B).
Figure 11 is a series of green laser light scattering images of experimental results for an ultrasonic scaler as described in example 2 below. Figure 11A shows the result for a 1p tip with water as coolant. Figure 11B shows the result for a 1p tip with modified coolant. Figure 11C shows the result for a modified tip with modified coolant.
Figure 12 is two green laser light scattering images of experimental results for a highspeed handpiece as described in example 2 below. Figure 12A shows the result with water as coolant. Figure 12B shows the result with modified coolant.
Figure 13 is two graphs showing the results of thermal testing, as described in example 3 below. Figure 13A shows the results for the ultrasonic scaler with 1p tip and water. Figure 13B shows the results for the ultrasonic scaler with 1p tip and modified coolant.
Figure 14 is two spectra depicting the results of ultrasonic scaler sound testing as described in example 5 below. The upper spectrum is for water. The lower spectrum is for modified coolant.
Figure 15 is a schematic of the test chamber used in example 8 below.

### DETAILED DESCRIPTION

The present invention provides devices which provide improvements in dentistry. Advantageously, the various aspects of the invention enable the prevention or reduction of aerosol generation during dental procedures, along with providing other improvements in performance.

Rotary and ultrasonic devices are routinely used for most dental procedures. The operator/clinician holds the dental device by the handpiece. The moving or working/cutting/scaling endpiece is attached. The rotary or vibrating tip or bur is routinely showered in atomised water to keep it cool during operation. The methods, compositions and devices described herein act to encapsulate the working end of the device within a fluid shield/barrier, and may be used alone. This fluid shield surrounds the working end (tip/bur) of the device and captures aerosol particles and debris that may be generated during the dental procedure, thus reducing the risk of transmission and inhalation of bioaerosols when using the devices. The methods, compositions and devices described herein may be used alone or in any combination to achieve this.

As used herein, the term spatter refers to droplets from 50 µm to several millimeters in diameter. The term "spatter" is used interchangeably with the term "splatter".

As used herein, the term aerosol refers to droplets less than 50 µm in diameter. Fine aerosols are droplets less than 10 µm in diameter. Very fine aerosols are droplets less than 5 µm in diameter.

The present disclosure provides a method of cooling a device for use in dentistry, the method comprising delivering a coolant to a working end of the device, the coolant comprising a Newtonian fluid having a viscosity greater than water.

It has been surprisingly found that use of a coolant comprising a Newtonian fluid that is more viscous than water to cool dental devices advantageously suppresses, and may completely eliminate, aerosolization compared to use of water. The higher viscosity means that the coolant has a tendency to form a fluid shield around the working end of the device, which traps potential aerosol particles and debris. Other potential advantages conferred by use of the modified coolant include improved device performance (e.g. by increasing cavitation when used with an ultrasonic scaler), noise reduction, and lower patient sensitivity to the coolant. Less coolant may also be required compared to water, potentially because inclusion of a more viscous fluid leads to lower evaporation from the coolant.

As used herein, the term dentistry refers to procedures carried out on the teeth, gums and oral cavity. Dentistry includes the diagnosis, prevention and treatment of diseases, conditions and disorders of the teeth, gums and oral cavity and also includes cosmetic procedures, that is, procedures primarily carried out to improve the appearance of the teeth, gums or oral cavity.

The device for use in dentistry may preferably comprise a handpiece and may optionally further comprise an endpiece connected to the handpiece. As used herein the term handpiece refers to a hand-held instrument used to perform a variety of dental procedures. The handpiece can provide resources (e.g. energy, coolant, air) to an endpiece. As used herein the term endpiece refers to a component that connects to a handpiece for performing a specific dental procedure.

As used herein, the term working end refers to the portion (generally the free end) of the device that carries out the function of the device. The working end of a handpiece may be the end of the handpiece that connects to an endpiece in use. The working end of an endpiece may be considered to be the distal portion (generally the free end) of the endpiece that in use is held in close proximity to, or in contact with, the dental (e.g. tooth) surface being treated. When a handpiece is connected to an endpiece, the working end of the device is generally considered to be the working end of the endpiece.

Types of dental handpieces include, but are not limited to, rotary handpieces, that provide rotational energy to an endpiece, and scaler handpieces, that provide vibrational energy to an endpiece. Rotary handpieces include low speed handpieces (handpieces that rotate at up to about 140,000 rpm) and highspeed handpieces (handpieces that rotate at about 180,000- 450,000 rpm). The rotary motion of highspeed handpieces (HSS) may be electric or air-driven. Endpieces typically used with a highspeed handpiece include dental burs. Scaler handpieces include sonic scaler handpieces (that operate at a frequency of about 3,000-9,000 Hz) and ultrasonic scaler handpieces (that operate at a frequency of about 20 to 50 kHz). Ultrasonic scaler (USS) handpieces may be magneto-strictive or piezoelectric. Endpieces typically used with an ultrasonic scaler handpiece include scaler tips.

Highspeed handpieces may be used in combination with dental burs for drilling procedures. Ultrasonic handpieces may be used in combination with scaler tips for ultrasonic scaling procedures. The method of the present disclosure is particularly effective in cooling highspeed handpieces (e.g. in combination with dental burs) and ultrasonic scaler handpieces (e.g. in combination with scaler tips).

As used herein, viscosity refers to dynamic viscosity unless otherwise indicated. Viscosity may be measured using a viscometer, for example using a rotational viscometer according to the DIN 53019-1 standard. Viscosity may preferably be measured at room temperature, e.g. at a temperature of 20 °C. Viscosity may preferably be measured at a rotational speed of 10 RPM. The viscosity of water under these conditions is 1.0005 cP. The viscosity may be measured in centipoise (cP). 1 centipoise is equal to 1 millipascal second (mPa·s).

The method of the disclosure utilizes a coolant comprising a Newtonian fluid having a viscosity greater than water. The viscosity of the Newtonian fluid may preferably be at least 20 cP, at least 25 cP, at least 50 cP, at least 100 cP, at least 250 cP, at least 500 cP, at least 750 cP or at least 1000 cP. The viscosity of the Newtonian fluid may preferably be less than 3000 cP, less than 2500 cP, less than 2000 cP, less than 1500 cP or less than 1000 cP. The viscosity of the Newtonian fluid may preferably be from 20 cP to 3000 cP, from 25 cP to 2500 cP, from 50 cP to 2000 cP, from 100 cP to 1500 cP or from 250 cP to 1000 cP, for example from 500 to 2000 cP or from 750 cP to 1500 cP.

The coolant in the method of the disclosure preferably has a viscosity greater than water.

The viscosity of the coolant may preferably be least 5 cP, at least 10 cP, at least 20 cP, at least 30 cP, at least 50 cP, at least 100 cP, at least 150 cP, at least 200 cP, at least 250 cP or at least 300 cP. The viscosity of the coolant may preferably be less than 3000 cP, less than 2000 cP, less than 1750 cP, less than 1500 cP, less than 1250 cP, less than 1000 cP, less than 750 cP, less than 500 cP, less than 400 cP, less than 350 cP, less than 300 cP, less than 250 cP, less than 200 cP, less than 150 cP, less than 100 cP or less than 75 cP. The viscosity of the coolant may preferably be from 5 cP to 2000 cP, from 10 cP to 1750 cP, from 20 cP to 1500 cP, from 30 cP to 1250 cP, from 50 cP to 1000 cP, from 100 cP to 750 cP, from 150 cP to 500 cP, from 200 cP to 400 cP, or from 250 cP to 350 cP, for example from 25 cP to 3000 cP.

A higher viscosity coolant may advantageously provide greater aerosol and/or spatter prevention but may require modifications to dental devices and associated apparatus (e.g. pumps) to use. At very high viscosities the coolant may not flow adequately to perform its function. On the other hand, lower viscosity coolants may advantageously be compatible with existing dental devices without the need for any modification but may not provide as effective aerosol and/or spatter suppression. Higher viscosities may also provide additional benefits, for example increased cavitation when used with ultrasonic scalers, and noise suppression. The optimum viscosity of the coolant may therefore vary depending on the desired outcome.

The optimum viscosity of the coolant may also differ depending on the dental device, procedure or conditions. For example, it has been discovered that a higher minimum viscosity may be required for use with a highspeed handpiece than for an ultrasonic scaler handpiece. Without wishing to be bound by theory, it is thought that this is because the tip of an ultrasonic scaler oscillates whilst the bur in a high speed handpiece rotates. The angular velocity/centrifugal force created by this rotation can cause coolant to accelerate away from the rotating bur, and thus may require a more viscous liquid to suppress aerosol creation than the oscillating ultrasonic scaler tip. Additionally, highspeed handpieces can operate at approximately 400,000 revolutions per minute (~ 7,000 rps) and require 50ml per minute of coolant flow. By comparison, ultrasonic scaler tips move at ~800-1000 oscillations per second and require 14-30ml/min of coolant flow. Thus, high-speed handpieces have potential to generate more aerosol than ultrasonic scalers, and thus a higher viscosity coolant may be required to eliminate aerosols.

For use with an ultrasonic scaler the viscosity of the coolant may be at least 20 cP, at least 25 cP, at least 30 cP, at least 50 cP or at least 100 cP. For use with an ultrasonic scaler the viscosity of the coolant may be less than 500 cP, less than 400 cP, less than 350 cP, less than 300 cP, less than 250 cP, less than 200 cP, less than 150 cP, less than 100 cP or less than 75 cP. For use with an ultrasonic scaler the viscosity of the coolant may be from 20 cP to 500 cP, from 25 cP to 400 cP, from 30 cP to 350 cP, from 50 cP to 300 cP or from 100 cP to 250 cP, e.g. from 20 cP to 150 cP, from 25 cP to 100 cP or from 30 cP to 75 cP.

For use with a highspeed handpiece the viscosity of the coolant may be at least 50 cP, at least 100 cP, at least 150 cP, at least 200 cP or at least 250 cP. For use with a highspeed handpiece the viscosity of the coolant may be less than 2000 cP, less than 1750 cP, less than 1500 cP, less than 1250 cP, less than 1000 cP, less than 750 cP, less than 500 cP, or less than 400 cP. For use with a highspeed handpiece the viscosity of the coolant may be from 50 cP to 2000 cP, from 100 cP to 1750 cP, from 150 cP to 1500 cP, from 200 cP to 1250 cP, or from 250 cP to 1000 cP, e.g. from 50 cP to 750 cP, from 100 cP to 500 cP or from 150 cP to 400 cP.

The method of the present disclosure utilises a coolant comprising a Newtonian fluid. As used herein, the term Newtonian refers to a fluid which has a viscosity that is independent of the shear rate. Newtonian fluids may therefore be identified by measuring their viscosities at different shear rates. If the viscosity is independent of shear rate then the fluid may be considered to be a Newtonian fluid.

The use of a Newtonian fluid in the coolant confers several advantages, particularly as compared to non-Newtonian fluids and coolants. Non-Newtonian fluids and coolants display a phenomenon known as Weissenberg effect, where pseudoplastic fluids in contact with a rotating rod are drawn upwards. In the case of the high-speed handpiece the rotating bur causes the non-Newtonian solution to be drawn up into the moving mechanical parts of the handpiece including the turbine chamber and exhaust lines, interfering with their action, and clogging moving parts. Newtonian fluids do not display this effect and so are beneficial for use in the coolants of the present disclosure as they help to prevent or control back flow of the coolant into the device, particularly in the case of highspeed handpieces.

A particularly suitable Newtonian fluid with a viscosity greater than water for inclusion in the coolant is glycerine. Other Newtonian fluids that may be used include, but are not limited to edible oils including vegetable oils such as avocado, canola, grape seed, macadamia nut, olive, peanut, rapeseed, rice bran, safflower, sesame soybean, sunflower and walnut oils. Such oils may be used successfully to suppress aerosol generation as their viscosities are suitable.

Thus the present disclosure may preferably provide a method of cooling a device for use in dentistry, the method comprising delivering a coolant to a working end of the device, the coolant comprising glycerine.

Glycerine (propane-1,2,3-triol, also known as glycerin or glycerol) provides all the advantages as described above in relation to the non-Newtonian fluid having a viscosity greater than water. Glycerine is a non-toxic compound that is miscible in water. Glycerine has surprisingly been found to confer further advantageous effects, particularly when used in the coolant at relatively high concentrations, including performance benefits, reduction of noise, and patient comfort benefits (reduced sensitivity). Without wishing to be bound by theory, reduced sensitivity may be the result of the much lower thermal conductivity, electrical conductivity, and dielectric constant of glycerine and glycerine solutions in comparison to water. These solutions may also increase mechanical efficiency of the instrument by acting as a lubricant.

In the method of the present disclosure the coolant comprises a Newtonian fluid having a viscosity greater than water (preferably glycerine). In some cases, the coolant may preferably consist of the Newtonian fluid (e.g. glycerine). In others, the coolant may preferably further comprise other components.

The coolant may preferably comprise at least 10 wt%, at least 20 wt%, at least 30 wt%, at least 40 wt%, at least 50 wt%, at least 70 wt%, at least 80 wt% or at least 90 wt% of the Newtonian fluid (e.g. glycerine). The coolant may preferably comprise less than 100 wt%, less than 98 wt%, less than 95 wt%, less than 90 wt%, less than 80 wt%, less than 70 wt% or less than 60 wt% of the Newtonian fluid (e.g. glycerine). The coolant may preferably comprise from 10 wt% to 100 wt%, from 20 wt% to 98 wt%, from 30 wt% to 95 wt%, from 40 wt% to 90 wt%, from 40 wt% to 80 wt%, or from 50 wt% to 70 wt% of the Newtonian fluid (e.g. glycerine), e.g. from 30 wt% to 80 wt% or from 40 wt% to 90 wt% of the Newtonian fluid (e.g. glycerine).

Having a greater amount of the Newtonian fluid (e.g. glycerine) may advantageously lead to a higher viscosity coolant.

The coolant may preferably comprise components other than the Newtonian fluid having a viscosity greater than water (e.g. glycerine). Preferably, the coolant further comprises water (e.g. distilled water). The inclusion of water in the coolant alongside the Newtonian fluid (e.g. glycerine) advantageously allows for the viscosity of the coolant to be tuned to the desirable level e.g. to provide acceptable aerosol suppression whilst maintaining the level of flowability required for use with existing dental equipment.

Preferably, the coolant may comprise at least 10 wt%, at least 20 wt%, at least 30 wt%, at least 40 wt%, or at least 50 wt% of water. The coolant may preferably comprise less than 80 wt%, less than 70 wt%, less than 60 wt%, less than 50 wt%, less than 40 wt%, less than 30 wt% or less than 20 wt% of water. The coolant may preferably comprise from 10 wt% to 80 wt%, from 20 wt% to 70 wt%, from 30 wt% to 60 wt%, from 40 wt% to 50 wt% of water e.g. from 10 wt% to 60 wt% of water.

The coolant may further comprise a thickening agent. The thickening agent may preferably be selected from gums (e.g. gum arabic, gum tragacanth, guar gum, locust bean gum), pectin, agar-agar, alginic acid, alginate salts, carrageenan, gelatin, hydroxyethyl cellulose, methyl cellulose, carboxymethyl cellulose (CMC), polyacrylic acid (PAA, also known as Carbomer) and mixtures thereof. Polyacrylic acid may be in the form of a homopolymer or may be crosslinked, for example with an allyl ether such as an allyl ether of pentaerythritol, allyl ether of sucrose, or allyl ether of propylene. Preferred thickening agents include alginic acid, alginate salts, polyacrylic acid and mixtures thereof. Alginate salts are particularly preferred. Alginate salts are advantageously non-toxic, highly soluble in water and can be readily flushed from the inner workings of high speed and ultrasonic dental devices using water. Preferred alginate salts include, but are not limited to, sodium alginate, potassium alginate, calcium alginate, ammonium alginate and mixtures thereof. Sodium alginate is particularly preferred.

When the coolant comprises a thickening agent, the coolant may preferably comprise at least 0.01 wt%, at least 0.05 wt%, at least 0.1 wt%, at least 0.2 wt%, or at least 0.3 wt%, e.g. at least 0.4 wt%, or about 0.5 wt% of the thickening agent. The coolant may preferably comprise less than 10 wt%, less than 5 wt%, less than 3 wt%, less than 2 wt%, less than 1 wt%, less than 0.8 wt% or less than 0.6 wt% of the thickening agent. The coolant may preferably comprise from 0.01 wt% to 10 wt%, from 0.05 wt% to 5 wt%, from 0.1 wt% to 3 wt%, from 0.2 wt% to 2 wt%, from 0.3 wt% to 1 wt% or from 0.4 wt% to 0.8 wt% of the thickening agent, e.g. from 0.1 wt% to 1 wt% of the thickening agent.

As described above, the Weissenberg effect makes pseudoplastic fluids impractical for use as coolants in dental devices, particularly in high-speed handpieces. This makes simple solutions of thickening agents in water unsuitable for use as coolants in the method of the present disclosure.

However, it has surprisingly been found that replacing at least part of the water content in such a solution with a viscous Newtonian fluid such as glycerine delivers the benefits of pseudoplastic fluids while eliminating the disadvantages. As demonstrated in the examples below, such a coolant fluid (e.g. a glycerine/water/sodium alginate mixture) is projected not as an atomized spray but rather as a series of fine, coherent, continuous, unbroken high-speed streams onto the spinning bur when used with a highspeed handpiece. This unexpected and surprising behaviour resembles neither the behaviour of glycerine/water coolants nor aqueous sodium alginate coolant fluids. Adding a thickening agent to a predominately Newtonian fluid (e.g. glycerine)/water solution, produced excellent aerosol suppression without a Weissenberg effect or mechanism clogging deposits.

The inclusion of a thickening agent is thus especially preferred for use with highspeed handpieces. For use with ultrasonic scalers, the coolant may preferably not comprise a thickening agent and may preferably consist of the Newtonian fluid (e.g. glycerine) and water. However, it may in some cases be preferable to include a thickening agent in the coolant for use with an ultrasonic scaler to achieve other benefits, e.g. increased cavitation effects. Some pseudoplastic behaviour of the coolant might also be desirable in some cases when using ultrasonic scalers, e.g. when using devices with less powerful pumps.

The coolant may comprise further additives. An example of a preferred additive is trisodium phosphate (Na₃PO₄), which may be included when access to effective water purification facilities is limited. Trisodium phosphate when included in coolant solutions captures calcium ions in hard water, preventing the formation of insoluble calcium salts (e.g. calcium alginate) which could clog up pipework in dental devices.

The method of the present disclosure may preferably not be a method for treatment of the human or animal body by surgery. The method of the present disclosure may preferably not be a method for treatment of the human or animal body by therapy. The method of the present disclosure may preferably not be a diagnostic method practised the human or animal body. The method of the present disclosure may preferably not be a method for treatment of the human or animal body by surgery or therapy. The method of the present disclosure may preferably not be a method for treatment of the human or animal body by surgery or therapy, nor a diagnostic method practised on the human or animal body.

The method of the present disclosure may preferably be for the purpose of reducing aerosolization in a dental procedure. The method may preferably reduce aerosolization by at least 50%, at least 75%, at least 80%, at least 85%, at least 90% or at least 95%, compared to use of water as coolant. The reduction in aerosolization may be measured by performing a simulated dental procedure (e.g. as set out in the examples below) using the method of the present disclosure and comparing the level of aerosolization compared to a control procedure in which water is used as the coolant. Aerosolization may be quantified using high-speed, high-resolution imaging and image/pixel analysis.

The method may further comprise performing a dental procedure with the device whilst it is being cooled.

Preferred dental procedures include, but are not limited to, dental drilling, scaling (e.g. ultrasonic scaling), bonding, orthodontic procedures, crown preparation, post and core preparation, bridge preparation, fitting of bridges, fitting of implants, fitting of crowns, fitting of caps, extractions, fitting of dentures, fillings, gum surgery, root canal treatment, application of dental sealant, teeth whitening, fitting of veneers, filing of teeth, root surface debridement, professional mechanical plaque removal (PMPR), supragingival and subgingival calculus removal, overhang removal, and placement and re-modelling of direct composite resin facings and veneers. Dental drilling and dental scaling (e.g. ultrasonic scaling) are particularly preferred.

Thus, the method of the present disclosure may preferably be a method of cooling a device for use in dental drilling. Alternatively, the method of the present disclosure may preferably be a method of cooling a device for use in dental scaling, more preferably ultrasonic scaling. Dental drilling is a surgical procedure. Dental scaling (e.g. ultrasonic scaling) is not a surgical procedure.

The dental procedure may preferably be a non-surgical and/or a non-therapeutic dental procedure. The dental procedure may preferably be a cosmetic procedure, for example orthodontic procedures, fitting of veneers, fitting of caps, and placement and re-modelling of direct composite resin facings and veneers.

The present disclosure also provides a coolant for use in a method of cooling a device for use in dentistry, the method comprising delivering the coolant to a working end of the device, the coolant comprising a Newtonian fluid having a viscosity greater than water (e.g. glycerine).

The coolant for use in the method, the method, the device, and the nature of the dentistry may preferably be as hereinbefore described or defined in respect of the method of the present disclosure.

The present disclosure also provides a coolant for cooling a device for use in dentistry, the coolant comprising a Newtonian fluid having a viscosity greater than water.

The Newtonian fluid having a viscosity greater than water may preferably be glycerine.

Thus, the present disclosure preferably provides a coolant for cooling a device for use in dentistry, the coolant comprising glycerine.

The coolant of the present disclosure may preferably be as hereinbefore described or defined in respect of the method of the present disclosure. Advantages and effects of the coolant composition are as hereinbefore described in respect of the method of the present disclosure.

The coolant of the present disclosure is suitable for use in a method of cooling a device for use in dentistry. Coolant compositions that contain toxic ingredients (e.g. alkylene glycols) are not suitable for such use.

A particularly preferred coolant of the present disclosure comprises (or consists of) glycerine, water and a thickening agent selected from gums (e.g. gum arabic, gum tragacanth, guar gum, locust bean gum), pectin, agar-agar, alginic acid, alginate salts, carrageenan, gelatin, hydroxyethyl cellulose, methyl cellulose, carboxymethyl cellulose (CMC), polyacrylic acid (PAA, also known as Carbomer) and mixtures thereof. Especially preferred thickening agents are polyacrylic acids and alginate salts (e.g. sodium alginate) as described above with respect to the method of the disclosure. Sodium alginate is particularly preferred. The particularly preferred coolants may optionally further comprise an additive as hereinbefore defined with respect to the method of the disclosure.

An especially preferred coolant composition of the present disclosure comprises or consists of:
from 20 wt% to 90 wt% glycerine;
from 0.1 wt% to 5 wt% thickening agent (e.g. polyacrylic acid or alginate salt, preferably sodium alginate);
from 5 wt% to 70 wt% water; and
optionally, an additive as hereinbefore described.

Another particularly preferred coolant composition of the present disclosure comprises or consists of:
from 30 wt% to 80 wt% glycerine;
from 0.1 wt% to 3 wt% thickening agent (e.g. polyacrylic acid or alginate salt, preferably sodium alginate);
from 10 wt% to 65 wt% water; and
optionally, an additive as hereinbefore described.

A further preferred coolant of the present disclosure comprises or consists of:
from 35 wt% to 60 wt% glycerine;
from 0.1 wt% to 1 wt% thickening agent (e.g. polyacrylic acid or alginate salt, preferably sodium alginate);
from 35 wt% to 60 wt% water; and
optionally, an additive as hereinbefore described.

These especially preferred coolants have advantageously been found to provide excellent aerosolization suppression, displaying some beneficial non-Newtonian attributes whilst surprisingly not suffering from the drawbacks of the Weissenberg effect when used in combination with a high-speed handpiece. Good compatibility with existing dental devices has also been achieved.

The present disclosure further provides use of a coolant as hereinbefore defined in a method of cooling a device for use in dentistry, the method comprising delivering the coolant to a working end of the device and further comprising performing a dental procedure with the handpiece whilst it is being cooled. The dental procedure may preferably be as hereinbefore described. The dental procedure may preferably be a therapeutic and/or surgical dental procedure. The dental device may preferably be as hereinbefore described with respect to the method of the disclosure. The working end may preferably be as herein before defined with respect to the method of the disclosure.

The present disclosure also provides an apparatus for use in dentistry, the apparatus comprising a coolant reservoir comprising a coolant as hereinbefore described, and a device connected to the coolant reservoir for delivery of coolant to a working end of the device to cool the device.

In the apparatus of the present disclosure, the device, coolant and working end may preferably be as hereinbefore defined with respect to the method or coolant of the disclosure. The device is particularly preferably a highspeed handpiece or an ultrasonic scaler handpiece. The apparatus of the disclosure may further comprise a power source for driving the device. The device may be connected to the coolant reservoir by any means known in the art, e.g. by tubing. The apparatus may further comprise a control unit for controlling the delivery of coolant from the reservoir to the working end of the device.

The present disclosure also provides a kit for use in dentistry, the kit comprising a coolant and a device for use in dentistry. The coolant, the device and the nature of the dentistry is each preferably as hereinbefore described. Most preferably, the device comprises and ultrasonic scaler handpiece or a high-speed handpiece.

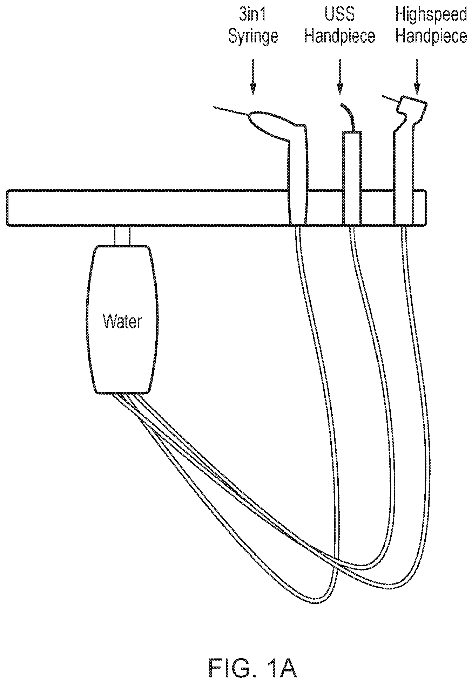

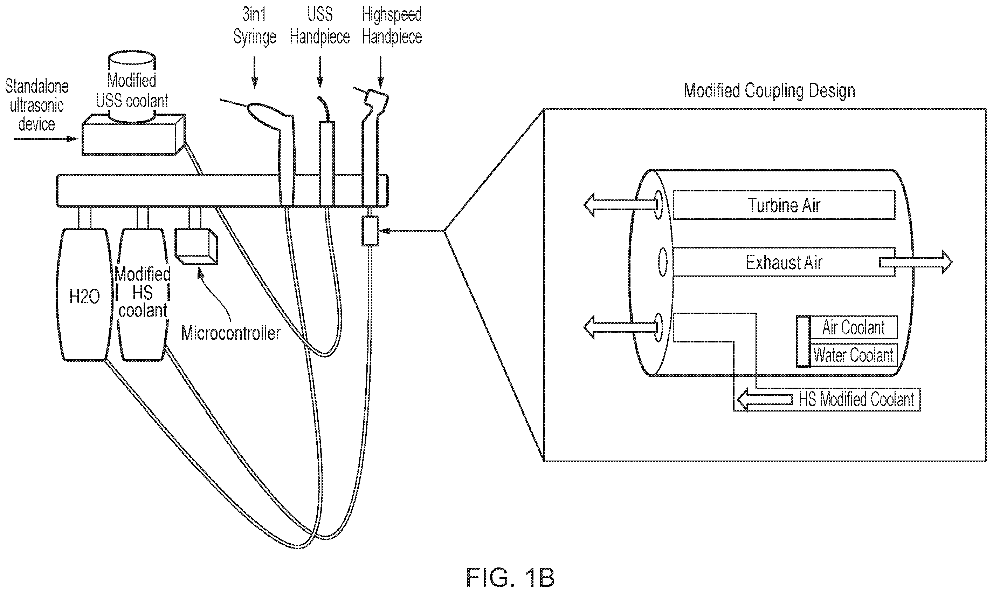

As described above, the coolants of the present disclosure are particularly effective when used with a highspeed handpiece or ultrasonic scaler handpiece. Highspeed handpieces in particular are generally used in the dental surgery by attaching to a dentistry base unit, which provides resources such as power, air coolant and liquid coolant to various handpieces attached to the dentistry base unit. The dentistry base unit comprises a liquid coolant reservoir that provides liquid coolant (generally water) for not only the highspeed handpiece but also to other instruments such as slow speed handpiece water spray and three-in-one syringe, used for most dental procedures. Modified coolants would not necessarily be suitable or desirable for use with these other instruments. A standard dentistry base unit is depicted in Figure 1A, showing several handpieces connected to a single water reservoir. The handpieces depicted as a three-in-one syringe, ultrasonic scaler handpiece and highspeed handpiece but these may vary. The dentistry base unit is depicted showing just the water reservoir for simplicity but generally also provides other resources to the handpieces as described above. Highspeed handpieces attach to the dentistry base unit using one of the few connection standards available for connection to water and pressurised air coming from the dental chair. Ultrasonic scaler devices may exist as standalone units with a liquid coolant reservoir attached directly to the scaler handpiece that provides coolant only to the scaler handpiece and not to any other devices (as depicted in Figure 1B), or they may attach to the dental unit in the same way as the highspeed handpiece (as depicted in Figure 1A). The dentistry base unit is often integrated with the dental chair, together forming one of the biggest and least frequently replaced investments in a dental surgery, with a total cost including installation of up to £50,000. Dental devices themselves are also expensive, with highspeed handpieces (electrical motor) costing over £4000 per unit and represent substantial investments. It is therefore desirable that the coolants of the present disclosure can be used with existing equipment with minimal modification.

The present disclosure thus also provides a coupling for connecting an alternative liquid coolant to a handpiece for use in dentistry, the coupling comprising:
an inlet interface for receiving resource connections from a dentistry base unit, the resource connections including a first liquid coolant connection; and
an outlet interface in communication with the inlet interface for passing on at least a subset of the resource connections to the handpiece,
wherein the coupling comprises an auxiliary inlet for receiving an alternative liquid coolant connection, the auxiliary inlet being communicable with the outlet interface to pass on the alternative liquid coolant connection via the outlet interface to the handpiece in place of the first liquid coolant connection.

The coupling of the present disclosure advantageously allows use of an alternative coolant (e.g. the coolant of the disclosure hereinbefore described) via existing commercially available handpieces and dentistry base units, without affecting the function of other devices of the dentistry base unit and without requiring further modification of the equipment (e.g. the handpiece and/or dentistry base unit). The coupling may be a separate device for insertion between the handpiece and dentistry base unit, for example between the handpiece and the tubing connecting the handpiece to the dentistry base unit. Alternatively, the coupling may be an integral part of the handpiece, tubing or dentistry base unit.

The auxiliary inlet may be for receiving an alternative liquid coolant connection from an alternative liquid coolant reservoir. The auxiliary inlet is preferably not located at the inlet interface of the coupling. The auxiliary inlet is preferably not located at the outlet interface of the coupling. The first liquid coolant connection may preferably be a water coolant connection. The alternative liquid coolant may be a coolant as hereinbefore described with respect to the method or coolant of the disclosure.

The coupling of the present disclosure may preferably comprise a main body and a control unit. The control unit may preferably be for the purpose of controlling the delivery of one or more resources to the handpiece via the resource connections. One or more of the resource connections may preferably pass from the inlet interface to the outlet interface of the main body via the control unit. Other resource connections (e.g. one or more of the resource connections) may preferably pass directly through the main body, without passing through the control unit. The control unit may preferably comprise one or more valves and/or actuators (e.g. one or more servo valves) for controlling the delivery of one or more resources to the handpiece via the resource connections. The one or more valves and/or actuators may preferably be located on one or more of the resource connections within the control unit. When the coupling comprises a main body and a control unit, the main body may preferably comprise the inlet interface and the outlet interface, and the control unit may preferably comprise the auxiliary inlet for receiving the alternative liquid coolant connection.

The coupling of the present disclosure may advantageously allow for the control of the timing, flow rate and/or delivery mechanism of the resources (e.g. coolant air (chip air), liquid coolant, turbine air) to the handpiece. This may, for example, facilitate the mixing of coolant air and liquid coolant to maximise the effectiveness of the alternative coolant with a highspeed handpiece.

The coupling may be configured to replace the first liquid coolant connection with the alternative liquid coolant connection, such that the alternative liquid coolant connection but not the first liquid coolant connection may be passed on to the handpiece. In this case, the coupling may comprise a termination for the first liquid coolant connection. When the coupling comprises a control unit, the termination for the first liquid coolant connection may be located in the main body of the coupling or in the control unit. The first liquid coolant connection may be terminated by any suitable means available to one of skill in the art, for example the first liquid coolant connection may be capped or otherwise sealed. Thus, the termination may comprise a cap or a seal, preferably at an end of the first liquid coolant connection, e.g. at an end of the first liquid coolant connection distal from the inlet interface and/or at an end of the first liquid coolant connection within the coupling, e.g. within the body or the control unit of the coupling.

Alternatively, the coupling may be configured to allow switching between the first liquid coolant connection and the alternative liquid coolant connection, such that either coolant connection may be passed on to the handpiece. In this case, the coupling may comprise a means for switching between the first liquid coolant connection and the alternative liquid coolant connection. The means for switching between the first liquid coolant connection and the alternative liquid coolant connection may preferably be a valve (e.g. a switching valve). The means for switching between the first liquid coolant connection and the alternative liquid coolant connection may preferably be located on an intersection of the first liquid coolant connection and the alternative liquid coolant connection. When the coupling comprises a control unit, the means for switching between the first liquid coolant connection and the alternative liquid coolant connection may preferably be located in the control unit (i.e. the control unit may preferably comprise the means for switching between the first liquid coolant connection and the alternative liquid coolant connection).

The nature of the resource connections will vary depending on the nature of the handpiece to be used with the coupling but may comprise a turbine air connection (e.g. for air-driven highspeed handpieces), an air coolant connection ("chip air", e.g. for highspeed handpieces) and/or an electric/power connection. The resource connections may further comprise an exhaust air connection for passing on exhaust air from the handpiece (e.g. highspeed handpiece) to the dentistry base unit where it is vented to the room. The inlet and outlet interfaces are in communication via the resource connections which may, for example, include tubing (e.g. for air and liquid coolant) and/or cables (e.g. for electric/power) for delivery of resources from the dentistry base unit to the handpiece.

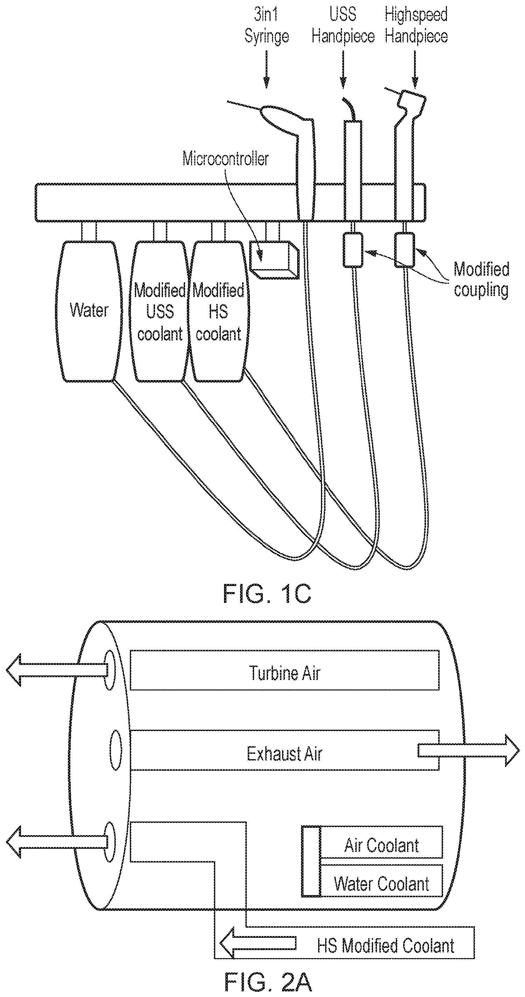

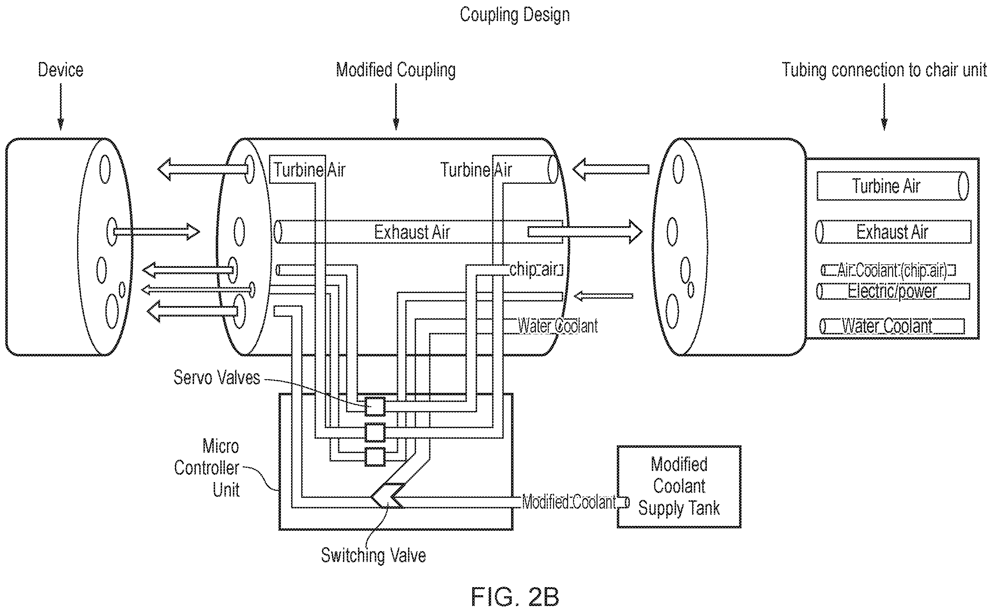

Non-limiting exemplary couplings, particularly suitable for use with a highspeed handpiece, are depicted in Figures 2A and 2B. Exemplary couplings suitable for use with an ultrasonic scaler handpiece may be similar to those exemplified for use with a high-speed handpiece but would generally not include any air coolant (chip air) or exhaust air connections or channels.

Figure 2A depicts a coupling for connecting an alternative liquid coolant ("HS modified coolant") to a highspeed handpiece. The coupling comprises an inlet interface (right hand side) for receiving turbine air, air coolant and water coolant connections from a dentistry base unit and an outlet interface (left had side) for passing on a subset of the resource connections (in this case the turbine air connection) to the handpiece. The coupling of Figure 2A is configured to replace the water coolant connection with the alternative liquid coolant connection, such that only the alternative liquid coolant is delivered on to the handpiece. The coupling therefore comprises a termination for the water coolant connection within the coupling. In Figure 2A the air coolant connection is depicted as also being terminated in the coupling but the air coolant connection may preferably be passed on to the handpiece. The coupling also comprises an auxiliary inlet for receiving the alternative liquid coolant connection ("HS modified coolant"), which is in communication with the outlet interface (e.g. via tubing) to pass on the alternative liquid coolant connection to the highspeed handpiece in place of the water coolant connection.

Figure 2B depicts an alternative coupling for connecting an alternative liquid coolant ("modified coolant") to a handpiece. The coupling comprises a main body and a control unit ("microcontroller unit"). The main body of the coupling comprises an inlet interface (right hand side) for receiving resource connections from a dentistry base unit ("chair unit"). The resource connections include a turbine air connection, air coolant (chip air) connection, electric/power connection and water coolant connection. The resource connections also comprise an exhaust air connection for passing on exhaust air from the handpiece to the dentistry base unit. The coupling also has an outlet interface (left hand side) for passing on the resource connections to the handpiece. The control unit of the coupling comprises an auxiliary inlet for receiving an alternative liquid coolant connection ("modified coolant") from an alternative liquid coolant reservoir ("modified coolant supply tank"), the auxiliary inlet being communicable with the outlet interface to pass on the alternative liquid coolant connection via the outlet interface to the handpiece in place of the water coolant connection.

In the coupling of Figure 2B the turbine air connection, air coolant (chip air) connection, electric/power connection and water coolant connection pass from the inlet interface to the outlet interface via the control unit. The exhaust air connection passes from the inlet interface to the outlet interface directly through the main body of the coupling (i.e. not via the control unit). Servo valves are located on the turbine air, air coolant and electric/power resource connections in the control unit for controlling the delivery of the resources to the handpiece. The water coolant and alternative liquid coolant connections intersect in the control unit. A switching valve is located to the intersection. This allows switching between the water coolant and modified coolant connections so that either coolant may be delivered to the handpiece via the outlet interface.

The present disclosure further provides an apparatus for use in dentistry, the apparatus comprising a first coolant reservoir comprising a first liquid coolant, an alternative coolant reservoir comprising an alternative liquid coolant different from the first liquid coolant, and a handpiece, wherein the handpiece is connected to the first coolant reservoir and the alternative coolant reservoir via a coupling according to any preceding claim. The handpiece is preferably an ultrasonic scaler handpiece or a high-speed handpiece. The first liquid coolant is preferably water. The second liquid coolant is preferably a coolant as hereinbefore described in relation to the method or coolant of the disclosure.

The present disclosure also provides an apparatus for use in dentistry, the apparatus comprising:
a first coolant reservoir comprising a first liquid coolant having a first viscosity;
a second coolant reservoir comprising a second liquid coolant having a second viscosity different from the first viscosity; and
at least one handpiece connected to each coolant reservoir.

Traditional dentistry units (such as that shown in Figure 1A) contain a single liquid coolant reservoir connected to multiple different handpieces. As such the same coolant - generally water - must be used for each handpiece, regardless of the specific requirements of each handpiece. The apparatus of the present disclosure allows the use of different coolants with different handpieces of the dentistry unit. The viscosity and composition of each coolant may therefore be tuned to the needs of the specific handpiece to which it is connected. For example, water may be used to cool one or more handpieces (e.g. a three-in-one syringe) whilst a more viscous coolant may more advantageously be used to cool a different handpiece (e.g. a highspeed handpiece and/or ultrasonic scaler handpiece). The benefits of using a more viscous coolant (than water) with a highspeed handpiece or ultrasonic scaler are described above.

Viscosity may be defined and measured as hereinbefore described in relation to the method of the disclosure.

The at least one handpiece may be connected to each coolant reservoir for delivery of coolant to a working end of the handpiece to cool the handpiece, or to cool an endpiece attached to the handpiece.

Preferably, the second viscosity is greater than the first viscosity. The second liquid coolant may preferably be a coolant as hereinbefore defined and described in relation to the method of the disclosure in relation to the coolant of the disclosure. The second liquid coolant may preferably comprise glycerine and may optionally further comprise a thickening agent. The thickening agent may preferably be as hereinbefore defined and described in relation to the method or coolant of the disclosure. The first liquid coolant may preferably comprise (e.g. consist of) water.

The present disclosure may thus preferably provide an apparatus for use in dentistry comprising:
a first coolant reservoir comprising a first liquid coolant comprising water;
a second coolant reservoir comprising a second liquid coolant comprising glycerine, wherein the first liquid coolant is different from the second liquid coolant; and
at least one handpiece connected to each coolant reservoir.

The at least one handpiece connected to each coolant reservoir may be the same or may be different. The at least one handpiece connected to each coolant reservoir may preferably comprise a first handpiece connected to the first coolant reservoir and a second handpiece connected to the second coolant reservoir. Preferably the at least one handpiece connected to the first coolant reservoir is different from the at least one handpiece connected to the second coolant reservoir. Each handpiece may be as hereinbefore defined and described above in relation to the method of the disclosure. Preferably, the at least one handpiece connected to the first coolant reservoir comprises (e.g. is) a 3 in 1 syringe handpiece, high speed handpiece, slow speed handpiece, ultrasonic handpiece or a combination thereof, more preferably a 3 in 1 handpiece and/or a slow speed handpiece. The at least one handpiece connected to the second coolant reservoir may preferably comprise a highspeed handpiece and/or an ultrasonic scaler handpiece. More preferably, the at least one handpiece connected to the second coolant reservoir comprises (e.g. is) a highspeed handpiece.

When the at least one handpiece connected to the second coolant reservoir comprises (e.g. is) a highspeed handpiece, the second coolant may preferably be especially suited to use with a highspeed handpiece. Preferred characteristics of such a coolant are as described above with respect to the method or coolant of the disclosure.

The apparatus of the present disclosure may further comprise a (e.g. first) coupling as hereinbefore described and defined. The at least one handpiece (e.g. second handpiece) connected to the second coolant reservoir may preferably be connected to the second coolant reservoir via the (e.g. first) coupling. The coupling may preferably be connected to the first coolant reservoir, the second coolant reservoir and at least one handpiece (e.g. the second handpiece). Preferably, the inlet interface of the coupling may be connected to the first coolant reservoir. Preferably, the outlet interface of the coupling may be connected to the at least one handpiece connected to the second coolant reservoir (e.g. the second handpiece). Preferably, the auxiliary inlet of the coupling may be connected to the second coolant reservoir. The at least one handpiece connected to the second coolant reservoir (e.g. the second handpiece) may, therefore, preferably be connected to the second coolant reservoir via a coupling as hereinbefore described and defined. An exemplary, non-limiting, schematic of an apparatus comprising a coupling is shown in Figure 1B.

The apparatus of the present disclosure may preferably further comprise a third coolant reservoir comprising a third liquid coolant having a third viscosity different from the first viscosity, and at least one handpiece (e.g. a third handpiece) connected to the third coolant reservoir. The third viscosity may be the same as or different to the second viscosity but is preferably different to the second viscosity. The third viscosity may preferably be greater than the first viscosity. The third viscosity may preferably be lower than the second viscosity. The third liquid coolant may preferably be a coolant as hereinbefore defined and described in relation to the method or coolant of the disclosure. The third liquid coolant may preferably comprise glycerine.

The present disclosure may thus preferably provide an apparatus for use in dentistry comprising:
a first coolant reservoir comprising a first liquid coolant comprising water;
a second coolant reservoir comprising a second liquid coolant comprising glycerine;
a third coolant reservoir comprising a third liquid coolant comprising glycerine, wherein the first liquid coolant is different from the second and third liquid coolants, and preferably wherein the second liquid coolant is different from the third liquid coolant; and
at least one handpiece connected to each coolant reservoir.

Preferably the at least one handpiece (e.g. the third handpiece) connected to the third coolant reservoir is different from the at least one handpiece (e.g. the first handpiece) connected to the first coolant reservoir. Preferably the at least one handpiece (e.g. the third handpiece) connected to the third coolant reservoir is different from the at least one handpiece (e.g. the second handpiece) connected to the second coolant reservoir. Preferably, the first, second and third handpieces are all different from one another. The at least one handpiece (e.g. the third handpiece) connected to the third coolant reservoir may be as hereinbefore defined and described above in relation to the method of the disclosure.

The at least one handpiece (e.g. the third handpiece) connected to the third coolant reservoir may preferably comprise an ultrasonic scaler handpiece. When the at least one handpiece connected to the third coolant reservoir comprises (e.g. is) an ultrasonic scaler handpiece, the third coolant may preferably be especially suited to use with an ultrasonic scaler handpiece. Preferred characteristics of such a coolant are as described above with respect to the method or coolant of the disclosure.

The apparatus of the present disclosure may further comprise a second coupling. The second coupling may preferably be as hereinbefore described and defined in relation to the coupling of the present disclosure. The at least one handpiece (e.g. third handpiece) connected to the third coolant reservoir may preferably be connected to the third coolant reservoir via the second coupling. The second coupling may preferably be connected to the first coolant reservoir, the third coolant reservoir and at least one handpiece (e.g. the third handpiece). Preferably, the inlet interface of the second coupling may be connected to the first coolant reservoir. Preferably, the outlet interface of the coupling may be connected to the at least one handpiece connected to the third coolant reservoir (e.g. the third handpiece). Preferably, the auxiliary inlet of the coupling may be connected to the third coolant reservoir. The at least one handpiece connected to the third coolant reservoir (e.g. the third handpiece) may, therefore, preferably be connected to the third coolant reservoir via a second coupling as hereinbefore described and defined. An exemplary, non-limiting, schematic of an apparatus comprising a first and second coupling is shown in Figure 1C. The at least one handpiece (e.g. first handpiece) connected to the first coolant reservoir is preferably not connected to the second reservoir and is preferably also not connected to the third coolant reservoir, where present. The at least one handpiece (e.g. second handpiece) connected to the second coolant reservoir may optionally also be connected to the first coolant reservoir, preferably via a coupling as hereinbefore described (e.g. the first coupling). Alternatively, the at least one handpiece (e.g. second handpiece) connected to the second coolant reservoir may not be connected to the first coolant reservoir. Where a third coolant reservoir is present, the at least one handpiece (e.g. second handpiece) connected to the second coolant reservoir is preferably not connected to the third coolant reservoir. Where present, the at least one handpiece (e.g. third handpiece) connected to the third coolant reservoir may optionally also be connected to the first coolant reservoir, preferably via a coupling as hereinbefore described (e.g. the second coupling). Alternatively, the at least one handpiece (e.g. third handpiece) connected to the third coolant reservoir may not be connected to the first coolant reservoir. Where present, the at least one handpiece (e.g. third handpiece) connected to the third coolant reservoir is preferably not connected to the second coolant reservoir.

The apparatus of the disclosure may further comprise a source of one or more resources for the handpieces. For examples, the apparatus may further comprise one or more of a source of turbine air, a source of air coolant (chip air), and a source of electric or power. Each source may preferably be connected to one or more of the handpieces.

Physical modifications to devices may also contribute to reducing aerosolization by altering coolant flow patterns and direction of coolant delivery to the working end of the device so that it is encapsulated within a fluid formed shield to reduce aerosol production. In particular, a modified tip for a dental scaler has been developed.

The present invention thus provides a tip for a vibrating scaler for use in dentistry, the tip comprising:
a proximal inlet for receiving coolant;
a distal working portion for being vibrated to aid scaling; and
an outlet for delivering coolant received via the inlet to cool the working portion,
wherein the working portion defines a concave side and a convex side of the tip and the outlet is located on the convex side of the tip.

Generally, standard scaler tips have an outlet on the concave side of the tip (e.g. on the face elevation, underneath the J-bend of the tip). It has surprisingly been found that locating an outlet on the convex side of the tip (e.g. on the top/back elevation of the tip) advantageously helps to focus the flow of the fluid over the back of the tip and to capture and contain (trap) any stray particles of aerosol. Without wishing to be bound by theory, it is believed that modifying the location of the coolant exit in this way allows the fluid to exit on the back elevation of the tip, and flow along the back and down to the working end of the tip in a more consistent manner, forming a fluid shield around the working end of the tip. The modified tip also confers additional advantages beyond aiding aerosol suppression, including increasing the surface area of the tip that the coolant is in contact with, thereby improving cooling, and ensuring that there is sufficient coolant available in the desired area to facilitate the formation of cavitation bubbles to aid effective scaling. The tip of the present invention is particularly effective when used in combination with coolants of the disclosure as described above.

Preferably, the outlet is located such that coolant delivered therefrom in use can form a flowing liquid shield on the convex side of the tip. Advantageously, this fluid shield captures aerosol particles and debris that may be generated during the scaling procedure, thus reducing the risk of transmission and inhalation of bioaerosols when using the scaler.

The flowing liquid shield may preferably be formed on both the convex and concave side of the tip and may preferably entirely surround the working portion of the tip. Thus the outlet may preferably be located such that coolant delivered therefrom in use can form a flowing liquid shield enveloping the working portion of the tip.

The outlet may preferably be located proximal to the working portion and distal to the inlet. This advantageously aids delivery of the coolant to the working portion of the tip in a controlled manner, thereby helping to form a liquid shield around the working portion for aerosol suppression. In use, the outlet receives coolant from a handpiece via the inlet. The inlet and outlet are thus in fluid communication, for example by a channel or tube.

In preferred tips of the present invention, the tip may comprise a formation for channeling coolant delivered from the outlet in a distal direction on the convex side of the tip. The formation for channeling the coolant may take any suitable form. The outlet may preferably be beveled or chamfered to channel coolant delivered from the outlet in a distal direction, e.g. on the convex side of the tip. Alternatively or additionally, the working portion of the tip may preferably comprise a groove for channeling coolant delivered from the outlet in a distal direction, e.g. on the convex side of the tip. The formation (e.g. beveled/chamfered outlet, and/or groove) advantageously helps deliver coolant in a controlled manner to the working portion (e.g. the working end) of the tip to form a fluid shield.

The tip of the present invention may preferably further comprise a proximal connecting portion for connecting the tip to a scaler handpiece, the working portion extending distally from the connecting portion. In such tips, the connecting portion may preferably comprise a body segment, preferably with a larger cross-section than the working portion, and a shoulder segment connecting the body segment with the working portion. The working portion may thus extend distally from the shoulder segment. The outlet may preferably be located on the shoulder segment of the connecting portion. The shoulder segment may preferably define a beveled or chamfered shape of the outlet. The outlet may be fluidly connected to the inlet by a channel located within the body segment of the connecting portion.

In tips of the present invention comprising a proximal connecting portion, the connecting portion may preferably comprise a longitudinal axis extending from a proximal end of the connecting portion to a distal end of the connecting portion. Preferably, at least part of the working portion diverges from the longitudinal axis of the connecting portion to define the concave side and the convex side of the device. Preferably, the connecting portion is elongate along the longitudinal axis. Preferably, at least a segment of the connecting portion is symmetrical about the longitudinal axis. Preferably, the connecting portion comprises a substantially cylindrical segment.

In tips of the present invention comprising a proximal connecting portion, the inlet may preferably be located on the connecting portion, preferably on a proximal face of the connecting portion. Preferably, the connecting portion comprises an interface for locating and connecting the tip to a scaler handpiece, the interface comprising the inlet. Preferably, the interface further comprises a fastening for fastening the connecting portion to the handpiece to receive vibrations therefrom. The fastening may preferably comprise a threaded portion for fastening the connecting portion to the handpiece by screwing.

The connecting portion may preferably be integral with the working portion of the tip.

In preferred tips of the present invention, the working portion comprises an arcuate segment. The working portion (e.g. the arcuate segment of the working portion) may preferably have a varying radius of curvature. Preferably, the working portion comprises a substantially linear (e.g. linear) segment and an arcuate segment. The arcuate segment of the working portion may be located relatively proximally (e.g. proximal to the connecting portion). The linear segment of the working portion may be located relatively distally (e.g. distal from the connecting portion). The linear segment may extend distally from the arcuate segment. The working portion may thus preferably comprise a relatively proximal arcuate segment and a more distal linear segment extending from the arcuate segment. The arcuate segment of the working portion may extend distally from the shoulder segment of the connecting portion, and the linear segment of the working portion may extend distally from the arcuate segment of the working portion.

The working portion of the tip preferably comprises a resilient material. Suitable resilient materials include, but are not limited to, steel, preferably stainless steel (e.g. medical grade stainless steel), titanium, bronze, copper, gold, teflon, carbon fibre, polyether ether ketone, plastic and mixtures thereof. The working portion of the tip may preferably comprise a metal, e.g. stainless steel. The working portion of the tip is preferably capable of oscillating at an ultrasonic frequency (e.g. at from 20 to 50 kHz, preferably at from 25 to 40 kHz), preferably with a free end of the working portion moving within a displacement amplitude in the range of from 5 to 50 microns. Preferably, the working portion has a resonant frequency within the ultrasonic range (e.g. from 20 to 50 kHz, preferably from 25 to 40 kHz). Preferably, the tip is an ultrasonic scaler tip (e.g. a piezo ultrasonic scaler tip). The tip of the present invention is advantageously particularly suitable for use with ultrasonic scalers as aerosolization is a particular problem with scalers that operate in the ultrasonic range. It also confers additional advantages, such as improved cavitation, that are especially relevant in ultrasonic scaling.

In some preferred tips of the present invention, the tip comprises a further outlet, preferably located on the concave side of the tip. The further outlet may preferably be proximal to the working portion of the tip. The further outlet may be fluidly connected to the inlet by a channel located within the body segment of the connecting portion.

In tips of the invention that comprise a further outlet, the outlets are preferably positioned such that coolant delivered therefrom in use can form a flowing liquid shield enveloping the working portion of the tip. The tip may preferably comprise one or more formations for channeling coolant delivered from the further outlet in a distal direction on the concave side of the tip. The further outlet may be beveled or chamfered to channel coolant delivered from the further outlet in a distal direction on the concave side of the tip. The working portion may comprise a groove on the concave side for channeling coolant delivered from the further outlet in a distal direction on the concave side of the tip. As well as aiding formation of the liquid shield around the working portion of the tip, a further benefit of tips comprising a further outlet is that they may be readily produced from existing scaler tips which generally already have an outlet located on the concave side of the tip.

However, in other cases it may be preferable not to have further outlet, e.g. a further outlet located on the concave side of the device. This may be because an outlet on the concave side of the device may undesirably lead to an increase in aerosol and/or spatter. Thus, in other preferred tips of the present invention, the tip does not comprise a further outlet on the concave side of the device. Preferably the tip does not comprise any further outlets.

The tips of the present invention are designed for use in conjunction with a scaler handpiece. Thus the present invention also provides a vibrating scaler for use in dentistry, comprising a scaler handpiece connected to a tip as hereinbefore described. Preferably, the scaler handpiece is an ultrasonic scaler handpiece. The vibrating scaler may further comprise a coolant reservoir connected to the scaler handpiece. The coolant reservoir may preferably comprise a coolant as hereinbefore described in relation to the method or coolant of the disclosure.

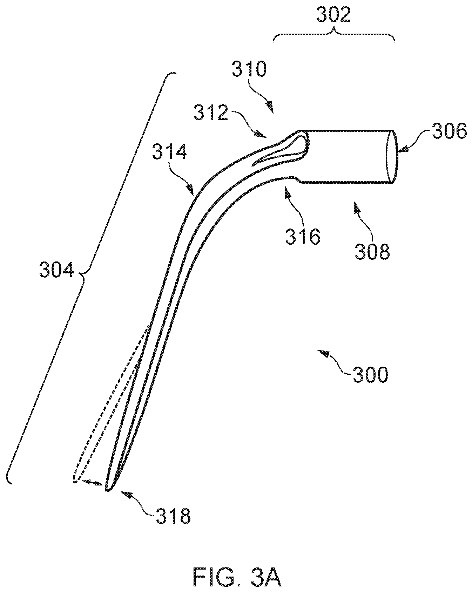

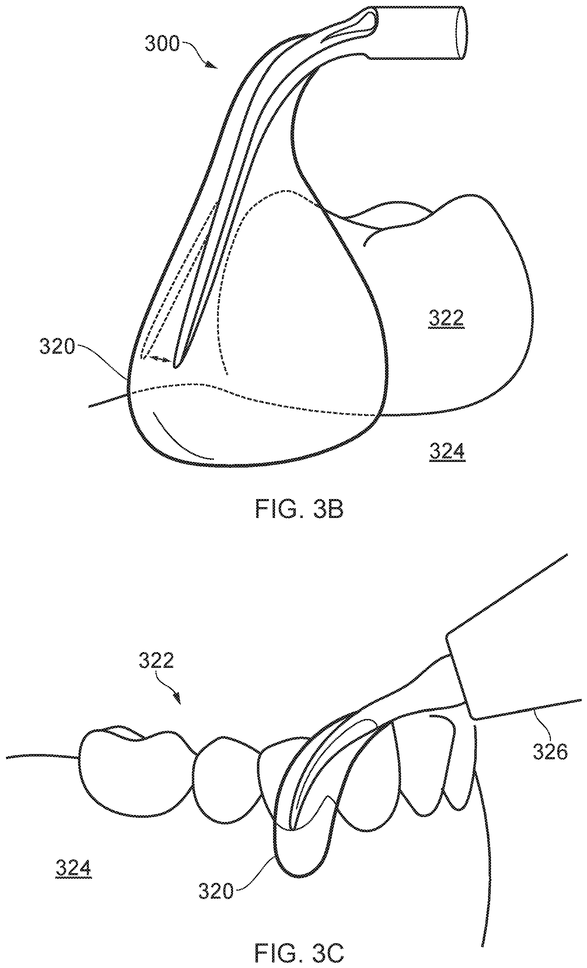

A non-limiting example of the tip of the present invention is shown in Figure 3A. Figures 3B and 3C are diagrammatic representations of the tip in use, showing the liquid shield formed around the working portion of the tip during use.

Referring to Figures 3A-C, there is shown a tip (300) for a dental scaler. The tip (300) comprises a proximal connecting portion (302) and a working portion (304) integral with and extending distally from the connecting portion (302). The connecting portion (302) comprises an interface (306) by which the tip is connected to a scaler handpiece in use (as shown in Figure 3C) and which comprises an inlet for receiving coolant from the handpiece in use. The connecting portion (302) further comprises a substantially cylindrical body segment (308) which is elongate and symmetrical about a longitudinal axis, and a shoulder segment (310), on which a beveled or chamfered outlet (312) is located. The outlet (312) is fluidly connected to the inlet. The working portion (304) of the scaler tip comprises an arcuate segment extending distally from the shoulder segment (310) of the connecting portion (302) and a substantially linear segment extending distally from the arcuate segment. The arcuate segment defines a concave and convex side of the tip (300), with the outlet (312) located on the convex side. The convex side of the working portion (304) comprises a groove (314) for channeling coolant distally from the outlet (312). The location and shape of the outlet (312), along with the groove (314) lead to the formation of a flowing fluid shield (320) around the working portion (304) of the tip (300) during use, as shown in Figures 3B and 3C.

The tip of Figures 3A-C has a further outlet (316) located on the concave side of the tip, on the shoulder segment (310) of the connecting portion (302). The further outlet (316) is also fluidly connected to the inlet and helps to channel coolant received from the inlet in a distal direction on the concave side of the tip (300) to form the flowing liquid shield (320) around the working portion (304) of the tip. Such a further outlet is optional.

The tip (300) is made of a resilient material, enabling displacement (represented by the dashed lines in Figures 3A and 3B) of a free end (318) of the working portion (304) of the tip (300) in an oscillating motion on receipt of vibrations from the scaler handpiece (326) in use to effect a scaling action on the tooth (322) and/or gum (324) surface (Figures 3B and 3C).

### EXAMPLES

### Experimental set up

These experiments were conducted in a simulated operatory of 12m² dimension and serviced by centralised ventilation equivalent of < 5 air changes per hour. The ambient temperature remained constant and was recorded at 23° C. The integrated dental unit air pressure was measured and remained constant throughout all testing in the range of 2.3-2.4 bars.

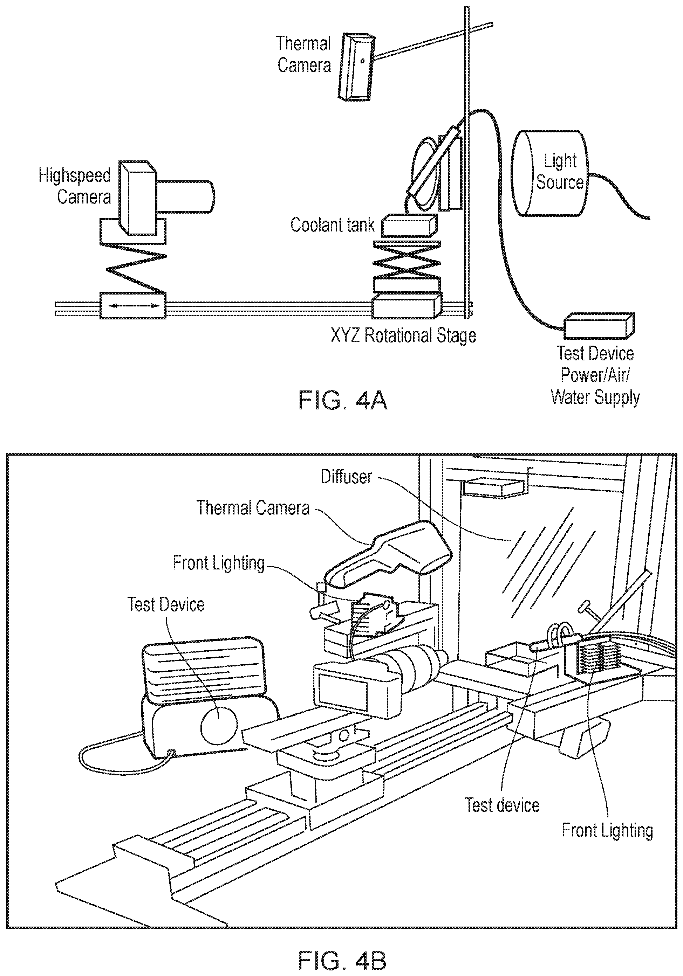

A bespoke rig (see figures 4A and 4B) was constructed using multiple XZY and rotational stages, a micro-positioning sliding rail and a laboratory lift facilitated testing of both the ultrasonic scaler and highspeed air-turbine handpiece in reproducible conditions to replicate a realistic clinical environment. A laser thermal camara (Flir TG-165) was mounted to the rig to measure ambient temperature during all test procedures. A clear flat glass tank was customised using microscope slides. High intensity LED illumination was achieved using a front light and bright field mode.

### Devices and materials

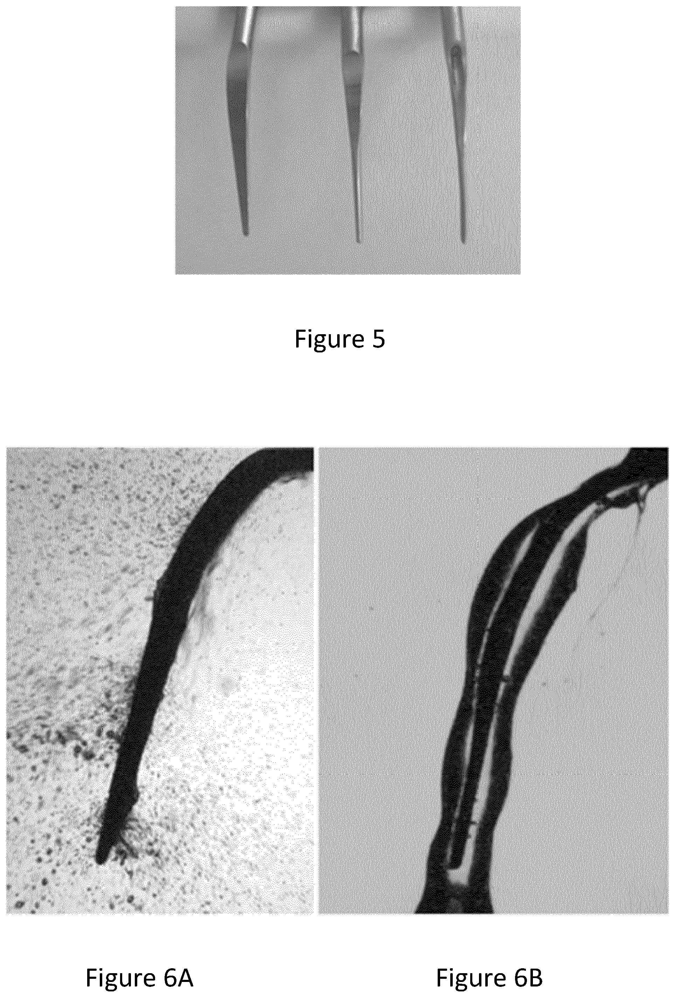

Piezo-electric ultrasonic dental scaler (27-32 kHz): Tigon Plus by W&H & Periodontal Scaler Tips (2U, 1P and modified tip as shown in Figure 5, wherein the left-hand tip is the 2U tip, the middle tip is the 1P tip and the right-hand tip is the modified tip). For the purposes of these experiments the modified tip was made by modifying an EMS PS tip, creating an additional exit on the convex elevation. However, the modified tip could be made by any suitable method, for example by forging, moulding (e.g. injection moulding) or 3D printing. This ultrasonic tabletop device with integrated coolant tank and heater, has a frequency range of 27-32kHz and is operated in combination with compatible medical grade stainless steel tapered tips. The coolant flow was set at 50% (Level 5 Tigon Plus device) and a power selection of 30 to aid standardisation and reproducibility. These settings remained constant throughout all investigations. The ultrasonic tip was positioned parallel to the vertical plane and secured to a micro-controlled adjustable rotational stage to ensure reproducibility and to facilitate high resolution imaging.

High-speed turbine handpiece (~400,000 RPM): Synea TG-98L by W&H plus new single use Tungsten Carbide and diamond Burs. The highspeed air-turbine handpiece was positioned parallel to the horizontal plane and secured in place to a micro-meter adjustable rotational stage.

A variety of different concentrations of modified coolants were run through the handpieces during a range of simulated activities to demonstrate results when in contact with a simulated tooth surface, close range of 1 mm from surface, and non-contact position (in the air).

Glycerine: For this work a 99.9% pure Vegetable Glycerine of premium quality USP pharma food grade was used, obtained from Special Ingredients, Unit 4, Foxwood Industrial Park,
Chesterfield, S41 9RN.

Sodium Alginate: Pharmaceutical grade sodium alginate was used and was obtained from Sigma Aldrich.

Water: unless otherwise specified, water used in the coolant compositions was distilled water.

Modified coolants: In these tests, unless otherwise specified, the modified coolant used in tests with the highspeed handpiece comprised 50 wt% glycerine, 49.5 wt% water, and 0.5 wt% sodium alginate, and the modified coolant used in tests with the ultrasonic scaler comprised 80 wt% glycerine, and 20 wt% water.

### Example 1: High-speed imaging

High resolution and high-speed imaging were used to observe coolant behaviour when devices were in contact and in proximity with simulated tooth surface. The coolant sprays were produced under normal procedural conditions whilst observed and recorded using high-speed imaging (Chronos 1.4, Kron Technologies Inc, Canada) with capacity for up to 38,500fps. Still images were captured using a Sony A6300 camera together with the following lenses and objectives to achieve a magnification of up to 5X. A 35mm Prime Lens (no zoom/35 mm), 50mm Prime Lens, 105mm Prime Macro Lens (Sigma 105mm 2.8 Macro Lens), 1.4x magnification Lens (Nikon Nikkor ED7 1.4x magnification Lens), 5x magnification Lens and a 5x Microscope Mitotoyo Plan Apochromat objective. Images were qualitatively assessed to understand fluid streaming, atomisation and droplet ejection.

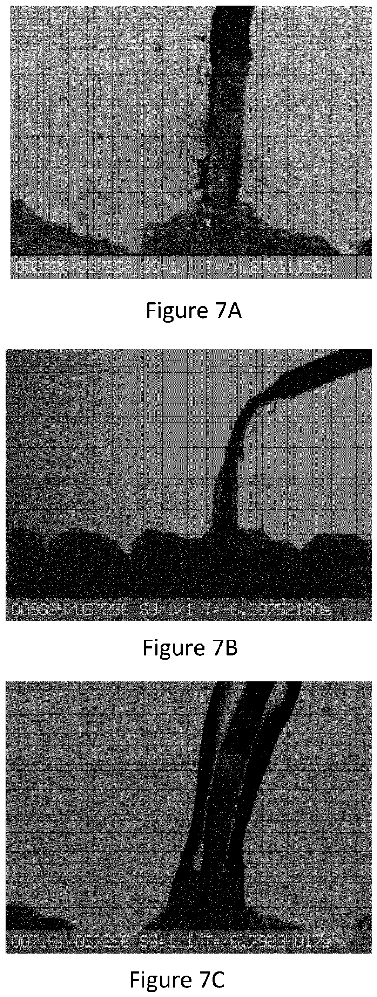

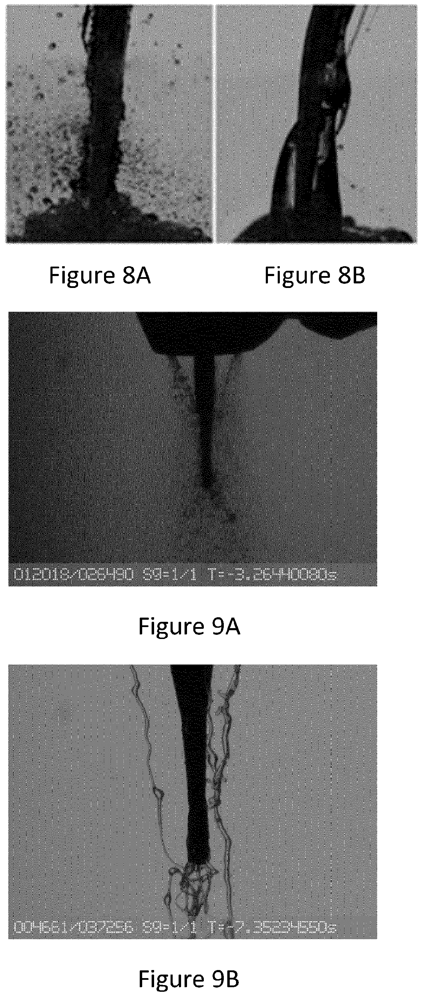

The results with the ultrasonic scaler are shown in Figures 6 to 8. Figure 6 shows results for the 1p tip in a non-contact position for water (Figure 6A) and modified coolant (Figure 6B). Figure 7 shows results for the 1p tip (Figures 7A and 7B) and the modified tip (Figure 7C) in close proximity to the simulated tooth surface for water (Figure 7A) and modified coolant (Figures 7B and 7C). Figure 8 shows results for the 1p tip in contact with the simulated tooth surface for water (Figure 8A) and modified coolant (Figure 8B).

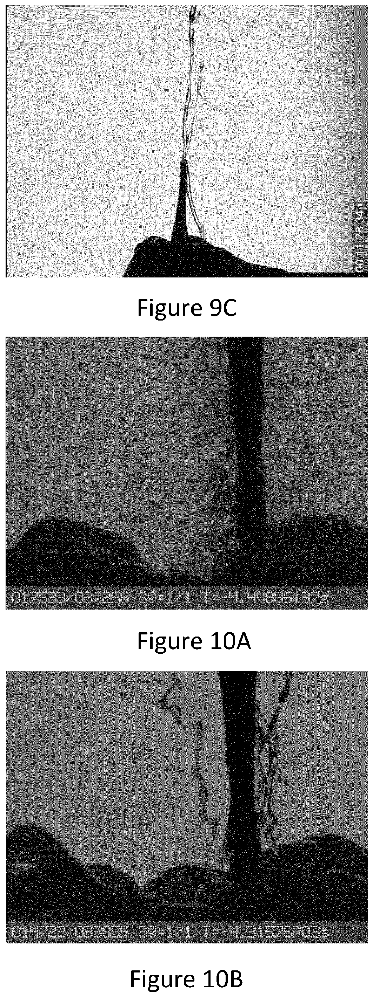

The results with the highspeed handpiece are shown in Figures 9 and 10. Figure 9 shows results for the bur in a non-contact position for water (Figure 9A) and modified coolant (Figures 9B and 9C). Figure 9C shows the highspeed handpiece upside down. Figure 10 shows results for the bur in close proximity to the simulated tooth surface for water (Figure 10A) and modified coolant (Figure 10B).

In the ultrasonic evaluation, the results demonstrate a significant reduction in aerosol production using the modified coolant and modified tip. The modified coolant forms a flowing liquid shield around the working end of the tip, providing additional tip/coolant contact and encapsulating debris and aerosol within. This effect is enhanced when used in combination with the modified tip. Small residual splatter was observed originating from the existing coolant exit located on the face elevation (underneath the J bend) of the tip. It is believed that this can be eliminated altogether by changing the tip design (sealing up the face exit).

For high-speed handpiece, the results demonstrate that almost complete eradication of aerosol has been achieved and the only splatter that can be seen is after the coolant exits ports at the head of the handpiece and before it touches the tooth surface. This is classed as uncontaminated aerosol during the time when it exits the coolant port and before it encounters the oral tissues, saliva or teeth. No aerosol was detected after the modified coolant contacts the tooth as the coolant adheres to the operative site and remains within the immediate area exhibiting a muco-adhesive like behaviour. The only splatter that is observed is > 50µm and happens before the coolant contacts the tooth surface. In both ultrasonic and high-speed devices, no contaminated aerosol was observed.

In the tests it was observed that the use of a modified coolant produced larger particles known as splatter. These larger particles are heavier and therefore fall to the ground quickly. In all tests, water atomised and extended over a much larger surface area and took longer to settle. The modified coolant produced larger splatter and splashes with no obvious misting compared to water which produced smaller particles in general that travelled much further from the source.

### Example 2: Green Line Laser light scattering test

A laser light-scattering test was performed on both devices using modified coolant and water to visualise and image coolant-generated particles and their trajectories (Quarton Green line laser wavelength 510~530 nm). These tests were performed with both devices in non-contact mode.

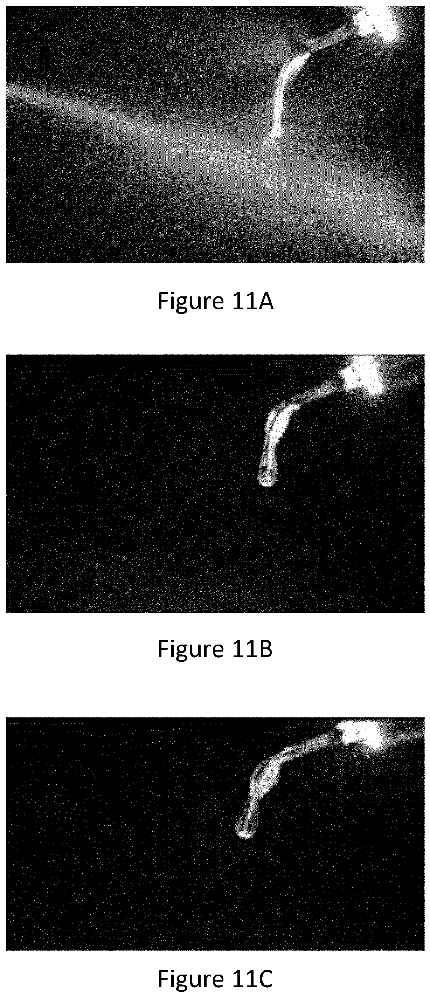

The results with the ultrasonic scaler are shown in Figure 11. Figure 11A shows the result for the 1p tip with water as coolant. Figure 11B shows the result for the 1p tip with modified coolant. Figure 11C shows the result for the modified tip with modified coolant.

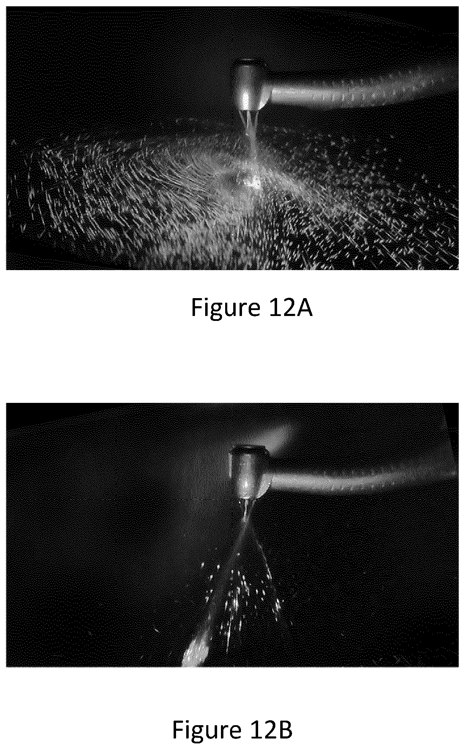

The results with the highspeed handpiece are shown in Figure 12. Figure 12A shows the result with water as coolant. Figure 12B shows the result with modified coolant.

These results further support those obtained with the high-speed imaging in Example 1.

### Example 3: Thermal testing

Highspeed handpiece: A thermocouple sensor (Pico sensor Type K) was secured inside the pulp chamber of five tooth specimens of homogeneous size and form, connected to a six-port data logger (Pico USB TC-08 Thermocouple Data Logger) and compatible computer software to record live thermal changes (PicoLog6 Software).The tooth specimens were mounted to a typodont base and secured in place on a laboratory lifting platform. The specimens were placed inside a water bath with temperature maintained at ~37° to simulate body temperature. Each sensor was secured in place at a standardised 3mm from the occlusal surface and cutting tests were directed towards the pulp chamber from the buccal direction. Each cut consisted of one timed, uninterrupted, micro-controlled movement for standardisation. Each cut made was 2 mm in depth in a buccal-occlusal direction. A second sensor was placed in the water bath to record temperature throughout the entire cutting procedure.

Ultrasonic scaler: Three sensors were used to record data for this device. A thermocouple sensor (Pico sensor type K) was secured inside the pulp chamber of five tooth specimens as previously described for high-speed handpiece tests. A second sensor was placed in the water bath to record temperature of the typodont throughout the procedure, and a third sensor positioned at the terminal end of the ultrasonic handpiece. The ultrasonic procedure consisted of a timed uninterrupted scaling activity of 1 minute duration. Tooth (enamel surface) remained stationary and the tip was used as per normal technique, in constant motion and a distance 1 - 2 mm per stroke, with tip parallel to the long axis of the tooth surface to replicate realistic conditions.

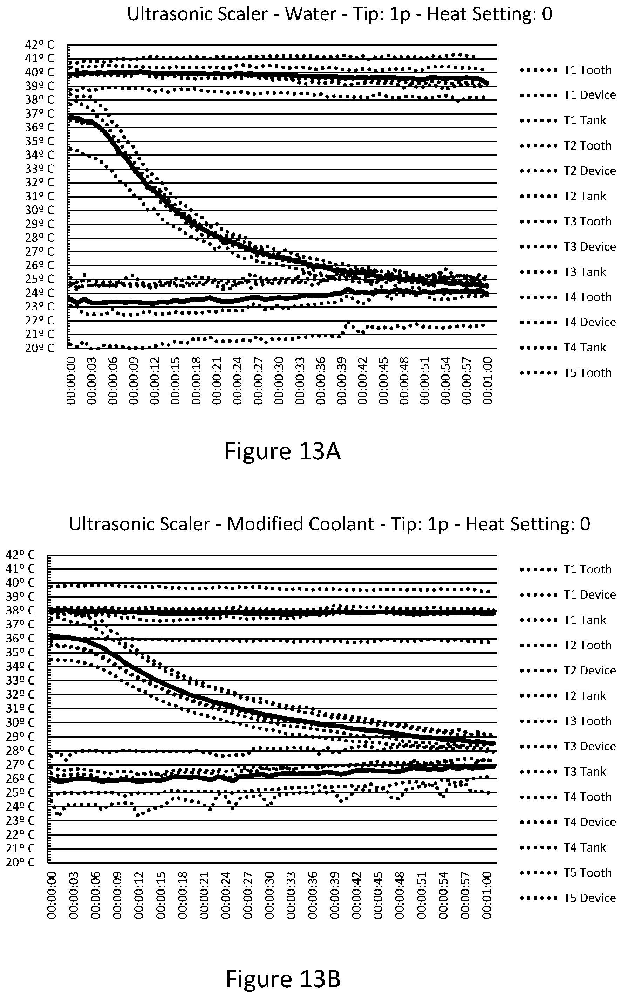

Results for the ultrasonic scaler with 1p tip and water (Figure 13A) and modified coolant (Figure 13B) at coolant temperature setting 0 are shown in Figure 13. From this it can be seen that no increase in temperature occurred when using the modified coolant solution. Analogous results were observed in tests using the 2u and modified tips, at coolant settings 0 (room temperature: 23 °C) and 3 (30 °C), and in tests with the highspeed handpiece.

### Example 4: Flow rate test

Tests were performed in vitro to measure the flow rates per minute of modified coolant compared to water.

Ultrasonic scaler: The ultrasonic device (W&H Tigon Plus) with a frequency of 27-32kHz was activated for 60 seconds uninterrupted. Power (30) and coolant flow (level 5) settings were standardised for all tests. Each coolant was tested with three different tips (W&H 2U tip, 1P tip, and the modified tip). Distilled water was added to the device tank and flow rate was measured and considered the control. Data for water coolant with a variety of tips was recorded for one minute. Test solution was a modified coolant and all variables remained constant, with flow rate per minute recorded for all three tips. Each test was repeated five times. The minimum coolant flow rate for piezo ultrasonic devices as recommended by manufacturer is 14ml per minute.

Highspeed handpiece: The recommended flow rate for highspeed handpieces is 50ml coolant per minute. The highspeed device (W&H Synea TG-98L) has 4 coolant ports and operates at ~400,000 RPM. Air pressure of 2.4 bar was recorded for this test. A Watson Marlow (Model 5055) peristaltic pump was used to regulate flow rate of the coolant during this test. The flow rate of two coolants, water and a modified coolant (M55 - 50 wt% glycerine:49.5 wt% distilled water:0.5 wt% sodium alginate) were recorded with 5 repeats of each for the purpose of this evaluation.

The results of the flow rate tests are set out below.

**Table 1: flow rate test results using the ultrasonic scaler.**

| | **Test No.** | **2U (ml/min)** | **1P (ml/min)** | **Mod Tip (ml/min)** |
|---|---|---|---|---|
| **Ultrasonic Scaler with Water** (Level 5) | T1 | 33.70 | 30.90 | 32.30 |
| | T2 | 33.50 | 32.80 | 32.90 |
| | T3 | 33.60 | 32.70 | 32.50 |
| | T4 | 33.40 | 32.90 | 32.70 |
| | T5 | 34.20 | 33.10 | 34.20 |
| | **Average** | **33.68** | **32.48** | **32.92** |
| | | | | |
| **Ultrasonic Scaler with Modified Coolant** (Level 5) | T1 | 23.60 | 23.40 | 23.40 |
| | T2 | 23.20 | 23.60 | 23.70 |
| | T3 | 23.00 | 23.50 | 23.40 |
| | T4 | 23.10 | 23.80 | 23.50 |
| | T5 | 23.50 | 23.50 | 23.30 |
| | **Average** | **23.28** | **23.56** | **23.46** |

**Table 2: flow rate test results using the highspeed handpiece.**

| | **Test No.** | **Flow Rate (ml/min)** |
|---|---|---|
| **High Speed Handpiece with Water** | T1 | 49.40 |
| | T2 | 50.20 |
| | T3 | 49.80 |
| | T4 | 50.10 |
| | T5 | 49.10 |
| | **Average** | **49.72** |
| | | |
| **High Speed Handpiece with Modified Coolant** | T1 | 49.30 |
| | T2 | 49.10 |
| | T3 | 48.90 |
| | T4 | 48.70 |
| | T5 | 49.00 |
| | **Average** | **49.00** |

These results show that flow rates per minute remained above the minimum requirements during all experiments for both the ultrasonic and highspeed devices.

### Example 5: Sound test

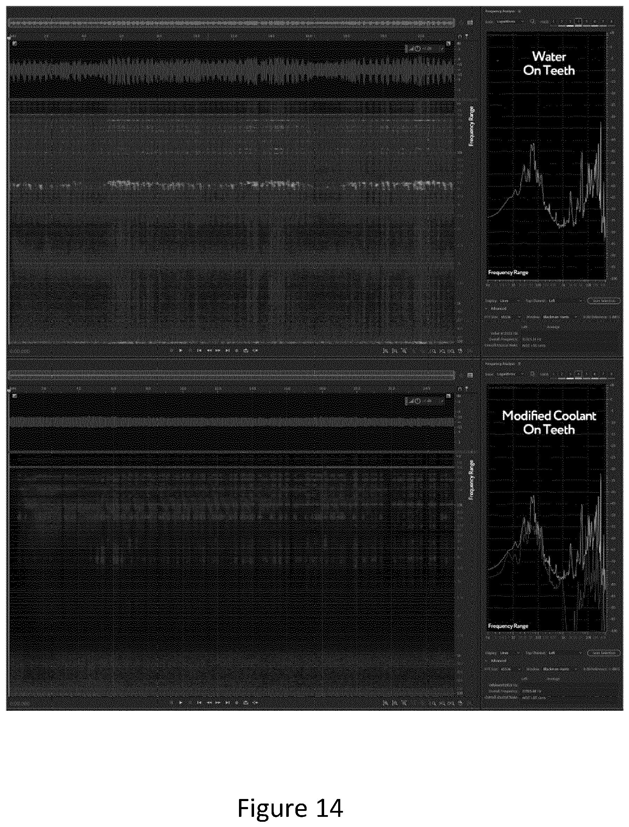

Noise tests were carried out on the ultrasonic scaler in vitro in the converted clinical surgery. The tests were conducted using a tabletop dental ultrasonic scaling device (W&H Tigon Plus) with a frequency range of 27-32kH. A new unused 1P tip (W&H) and two coolant liquids were chosen for the purposes of this test. The following settings were selected on the Tigon Plus device for both tests; power setting 30, coolant flow rate 5 and Heat setting of 0. Tooth specimens were prepared and mounted onto a typodont plate and secured to a lifting platform. The ultrasonic device was operator activated with the handpiece at a 45° angle to the horizontal plane. The device tip was positioned parallel to the tooth surface with the terminal 2mm of the tip in contact. Working noise was simulated by activating the device in a 1-2mm horizontal movement, keeping the tip in constant motion, using a supragingival biofilm removal technique for 30 seconds uninterrupted. A sound measuring device/ microphone Zoom H1 was positioned and secured in place directly above the tip of the ultrasonic scaler at a 20 cm distance. Adobe Audition 2020 was used to record and analyse the data. An exemplary frequency display obtained is shown in Figure 14 for water (upper spectrum) and modified coolant (lower spectrum).

The results of the sound tests performed on the ultrasonic device indicate a reduction in decibels and high-pitched noise. This is a significant finding in terms of clinician safety as well as patient comfort and treatment acceptance.

### Example 6: Viscosity measurements

Viscosity tests were carried out using a Brookfields DVE-HB Viscometer and UL (ultra-low) adapter. Temperature data was recorded for all solutions and revolutions per minute (RPM). Based on our viscosity testing we have created a range of viscosities for each device for aerosol reduction whilst permitting normal function and operation of the devices. Viscosity measurements were carried out according to the DIN 53019-1 standard.

The results of the viscosity testing are shown below in Table 3. "M55" is a coolant composition comprising 50 wt% glycerine:49.5 wt% distilled water:0.5 wt% sodium alginate. "M55+" is a coolant composition comprising 58.33 wt% glycerine:41.25 wt% distilled water:0.416 wt% sodium alginate.

**Table 3: viscosity test results of coolant compositions**

| Coolant composition | Speed RPM | Temp °C | Viscosity cP |
|---|---|---|---|
| 100 wt% glycerine | 10 | 24.5 | 1440 |
| 80 wt% glycerine: 20 wt% water | 10 | 24.5 | 58 |
| 75 wt% glycerine: 25 wt% water | 10 | 24.5 | 34 |
| 50 wt% glycerine: 50 wt% water | 10 | 24.5 | 6 |
| 1 wt% sodium alginate: 99 wt% water | 10 | 19.5 | 230 |
| 1 wt% sodium alginate: 99 wt% water | 50 | 19.5 | 197 |
| 1 wt% sodium alginate: 99 wt% water | 100 | 22.0 | 170 |
| M55 | 10 | 21 | 456 |
| M55 | 50 | 21 | 308 |
| M55 | 100 | 21 | 243 |
| M55+ | 10 | 23.5 | 512 |
| M55+ | 50 | 23.5 | 336 |
| M55+ | 100 | 23.5 | 262 |

### Example 7: Coolant compositions

A range of coolant compositions were tested using the methods set out above. Table 4 below sets out key observations made for each composition. Cavitation was observed using high speed imaging with magnification to identify the presence of cavitation bubbles.

**Table 4: Test results for different coolant formulations**

| **Device** | **Coolant Formula** | **Observations** |
|---|---|---|
| **Ultrasonic Device** | 80% Glycerine + 20% Distilled Water | Best combination for aerosol suppression achieved without any device modifications. Cavitation benefits observed. |
| | 100% Glycerine | Aerosol suppression achieved and significant cavitation benefits. Requires modification to the internal components of the device and pump |
| | 75% Glycerine + 25% Distilled Water | Aerosol suppression achieved but splatter observed. |
| | 60% Glycerine + 40% Distilled Water | Minimum Glycerine Level that achieves acceptable aerosol suppression without making any alterations to existing device. |
| | 80% Glycerine + 0.5% Sodium Alginate + 19.5% Distilled Water | Aerosol suppression achieved. Cavitation control observed. This formula is compatible with devices that have a less powerful pump. |

| **Device** | **Coolant Formula** | **Observations** |
|---|---|---|
| **Highspeed Handpiece** | 50% Glycerine + 49.5% Distilled Water + 0.5% Sodium Alginate | Best results for aerosol suppression without need for modifications to existing devices. |
| | 50% Glycerine + 49.5% Distilled Water + 0.5% Sodium Alginate + Trisodium Phosphate | Similar results as above, aerosol suppression achieved using a formula for use in practices for less than ideal / sub-par water purification facilities. |
| | 40% Glycerine + 59.5% Distilled Water + 0.5% Sodium Alginate | Minimum Glycerine Level Required to achieve acceptable aerosol suppression and back flow control (Weissenberg effect) without making modifications to the handpiece. |
| | 50% Glycerine + 49.5% Distilled Water + .5% Carbomer 934 | Satisfactory aerosol suppression achieved using an alternative thickening agent. |
| | 80% Glycerine + 20% Distilled Water | Aerosol suppression achieved without the use of any thickening agents, but moderate splatter observed. |
| | 100% Glycerine | Aerosol suppression achieved but requires internal modification to the handpiece. |
| | 1% Sodium Alginate + 99% Distilled Water | Passed through the handpiece pipework and suppressed aerosol to a high degree. However, Weissenberg effect observed - the rotating bur caused the coolant to be drawn up into the moving mechanical parts of the handpiece including the turbine chamber and exhaust lines, interfering with their action, and clogging moving parts. |

### Example 8: Particle measurements

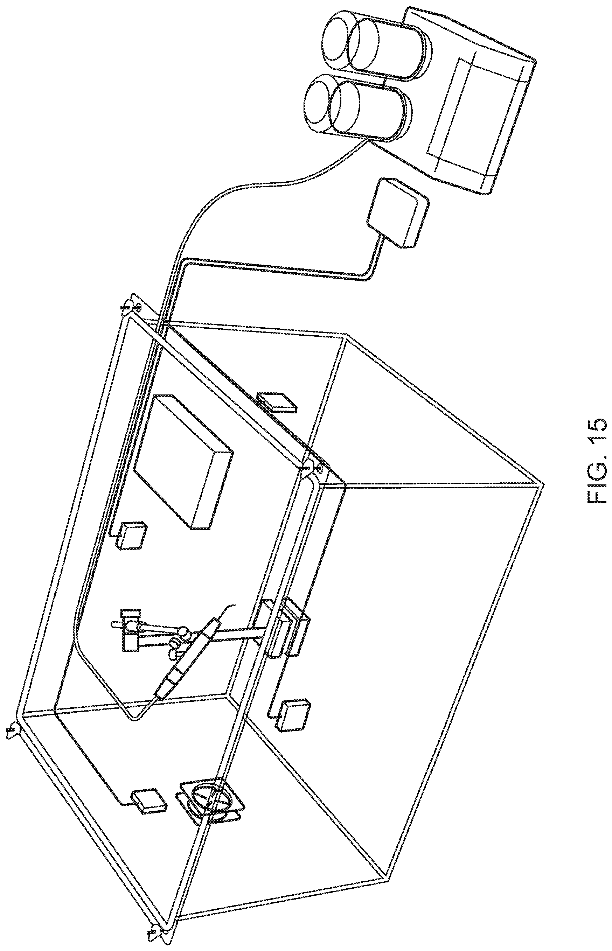

The experimental set up is shown in Figure 15. For the purposes of this investigation, different concentrations of aqueous glycerol coolant liquids were evaluated. Test coolants included 50%, 60%, 70%, 75% and 80% wt. aqueous glycerol. Traditional coolant used is distilled water, and this was the control. The solutions were prepared by adding glycerol to distilled water whilst agitating (Heidolph MR3001K, Germany) at 20°C for 15 minutes. The liquid was added to the reservoir of a standalone piezo electric ultrasonic scaler device 27-32kHz (Tigon plus, WH, Austria) with handpiece clamped in position at a height of 0.3m with tip perpendicular to the vertical plane and operated in an unobstructed steady state with a universal tip (1U) at a single power and coolant flow setting, based on routine usage and manufacturer's instructions for a timed procedure. Each procedure was repeated 6 times for water (control) and aqueous-glycerol concentrations.

Particle measurements were undertaken in a bespoke environmental chamber designed to ensure reproducible ambient conditions whilst providing time-resolved measurements of droplet particle sizes and multiple positions throughout instrument use. The chamber comprised of 4 particulate matter sensors Sensirion SPS30 (Sensirion, Switzerland), with a particle count range of 10µm-0.3µm and particle mass range 10µm - 1µm positioned 0.3m from the source with additional validation conducted with a calibrated 6 channel particle counter, Lasair 5100 (EMS Particle Solutions, UK). All sensors recorded 4 particle concentrations in µg/cm³, and 5 particle counts every second and exported to a data logger (MQTT, Influx DB). A running average of 10 seconds was applied to each data point.

This test is designed to detect every aerosol particle, including the smallest ones, in a tightly controlled environment.

The results are presented in Tables 5A (particle mass) and 5B (particle count). All values reported are the average of six runs.

**Table 5A: Particle mass data for different coolant formulations**

| Particle size | Less than 1µm | | Less than 2.5µm | | Less than 4µm | | Less than 10µm | |
|---|---|---|---|---|---|---|---|---|
| | Average | Max | Average | Max | Average | Max | Average | Max |
| Baseline values | 2.73 | 3.97 | 2.96 | 4.19 | 3.02 | 4.19 | 3.05 | 4.19 |
| 100% water | 63.83 | 119.61 | 145.65 | 294.21 | 207.98 | 429.78 | 242.26 | 504.61 |
| 70% glycerine - 30% water | -0.07 | 7.56 | 0.36 | 10.08 | 0.71 | 11.87 | 0.90 | 12.87 |
| 75% glycerine - 25% water | 0.17 | 4.45 | 1.93 | 8.86 | 3.33 | 12.84 | 4.10 | 15.05 |
| 80% glycerine - 20% water | -0.09 | 1.99 | 0.22 | 2.68 | 0.47 | 3.22 | 0.61 | 3.55 |

**Table 5B: Particle count data for different coolant formulations**

| Particle size | Less than 0.5µm | | Less than 1µm | | Less than 2.5µm | |
|---|---|---|---|---|---|---|
| | Average | Max | Average | Max | Average | Max |
| Baseline values | 18.58 | 27.31 | 21.64 | 31.58 | 21.78 | 31.67 |
| 100% water | 241.62 | 416.30 | 417.69 | 763.09 | 501.64 | 938.15 |
| 70% glycerine - 30% water | -1.57 | 47.77 | -1.06 | 58.21 | -0.60 | 60.16 |
| 75% glycerine - 25% water | -3.29 | 20.62 | -0.71 | 30.83 | 1.15 | 35.09 |
| 80% glycerine - 20% water | -1.39 | 12.46 | -1.05 | 15.22 | -0.72 | 15.81 |

**Table 5B continued: Particle count data for different coolant formulations**

| Particle size | Less than 4µm | | Less than 10µm | |
|---|---|---|---|---|
| | Average | Max | Average | Max |
| Baseline values | 21.80 | 31.68 | 21.81 | 31.69 |
| 100% water | 517.73 | 972.11 | 521.59 | 980.13 |
| 70% glycerine - 30% water | -0.51 | 60.52 | -0.49 | 60.62 |
| 75% glycerine - 25% water | 1.51 | 35.91 | 1.60 | 36.11 |
| 80% glycerine - 20% water | -0.66 | 15.92 | -0.64 | 15.95 |

The results show that the majority of the aerosols generated by ultrasonic scaling are in the smaller than a micron range; still big enough to carry dangerous levels of viruses and pathogens but not mentioned/addressed in the scientific literature.

These results show that an ultrasonic device using water as a coolant creates a significant increase in particle numbers compared with baseline recordings at 0.3m from the source. Coolant substitution with a 75% aqueous-glycerol solution resulted in a statistically significant reduction (p <0.0001) of particles compared to water (control). A further reduction was achieved with 80% aqueous-glycerol solution compared to 75% (p = 0.0016). This demonstrates the efficacy of the modified coolant in reducing aerosolization, including in relation to very fine aerosol particles <5µm.

The modified coolants achieved over 98% reduction of aerosols in the test conditions. In our experience, with simpler test methods typically used in other studies, or in clinical settings with mitigating factors, the results would be even closer to 100%.

### REFERENCES

Bennett AM, Fulford MR, Walker JT, Bradshaw DJ, Martin MV, Marsh PD: Microbial aerosols in general dental practice. Br Dent J 2000, 189, 664-667.
Harrel SK: Airborne spread of disease - implication for dentistry.J Calif Dent Assoc 2004, 32, 901-906.
Izzetti R, Nisi, M. Gabriele, and F. Graziani. COVID-19 Transmission in Dental Practice: Brief Review of Preventive Measures in Italy. 2020 J Dent Rest
King TB, Muzzin KB, Berry CW, Anders LM: The effectiveness of an aerosol reduction device for ultrasonic scalers. J Periodontol 1997, 68, 45-49.
Meng L, Hua F, Bian Z. (2020). Coronavirus disease 2019 (COVID-19): emerg-ing and future challenges for dental and oral medicine. J Dent Res [epub ahead of print 12 Mar 2020]. doi:10.1177/
Peng X, Xu X, Li Y, Cheng L, Zhou X, Ren B. 2020. Transmission routes of 2019-nCoV and controls in dental practice. Int J Oral Sci. 12(1):9.
Pîrvu C, P 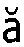 tra 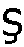 cu I, Pîrvu D, Ionescu C. The dentist's operating posture - ergonomic aspects. J Med Life. 2014;7(2):177-182.
Public Health England. COVID-19: Guidance for the remobilisation of services within health and care settings Infection prevention and control recommendations. 20 August 2020 (V1.0) GW-1502
Reddy V, Bennadi D, Satish G, et al. Occupational hazards among dentists: A descriptive study. Journal of Oral Hygiene & Health 2015; 3(5): 1-4.
Szymańska J: Dental bioaerosol as an occupational hazard in a dentist's workplace. Ann Agric Environ Med 2007, 14, 203-207.

## Claims

1. A tip (300) for a vibrating scaler for use in dentistry, the tip comprising:
a proximal inlet for receiving coolant;
a distal working portion (304) for being vibrated to aid scaling; and
an outlet (312) for delivering coolant received via the inlet to cool the working portion (304),
wherein the working portion (304) defines a concave side and a convex side of the tip, **characterized in that** the outlet (312) is located on the convex side of the tip.

2. The tip (300) according to claim 1, wherein the outlet (312) is located proximal to the working portion (304) and distal to the inlet.

3. The tip (300) according to claim 1 or claim 2, wherein the outlet (312) is beveled or chamfered to channel coolant delivered from the outlet (312) in a distal direction on the convex side of the tip.

4. The tip (300) according to any preceding claim, wherein the working portion (304) comprises a groove (314) for channeling coolant delivered from the outlet (312) in a distal direction on the convex side of the tip.

5. The tip (300) according to any preceding claim, further comprising a proximal connecting portion (302) for connecting the tip (300) to a scaler handpiece (326), the working portion (304) extending distally from the connecting portion (302).

6. The tip (300) according to claim 5, wherein the connecting portion (302) comprises a body segment (308), preferably with a larger cross-section than the working portion (304), and a shoulder segment (310) connecting the body segment (308) with the working portion (304), the working portion (304) extending distally from the shoulder segment (310), optionally wherein the outlet (312) is located on the shoulder segment (310) of the connecting portion (302).

7. The tip (300) according to claim 5 or claim 6, wherein the connecting portion (302) comprises a longitudinal axis extending from a proximal end of the connecting portion to a distal end of the connecting portion, wherein at least part of the working portion (304) diverges from the longitudinal axis of the connecting portion to define the concave side and the convex side of the device.

8. The tip (300) according to any of claims 5 to 7, wherein the inlet is located on the connecting portion (302), preferably on a proximal face of the connecting portion.

9. The tip (300) according to claim 8, wherein the connecting portion (302) comprises an interface (306) for locating and connecting the tip to a scaler handpiece (326), the interface (306) comprising the inlet and further comprising a fastening for fastening the connecting portion (302) to the handpiece (326) to receive vibrations therefrom.

10. The tip (300) according to any of claims 5 to 9, wherein the connecting portion (302) is integral with the working portion (304) of the tip.

11. The tip (300) according to any preceding claim, wherein the working portion (304) comprises an arcuate segment and a substantially linear segment extending distally from the arcuate segment, optionally wherein the arcuate segment of the working portion extends distally from the shoulder segment (310) of the connecting portion (302).

12. The tip (300) according to any preceding claim, further comprising a further outlet (316), the further outlet (316) located on the concave side of the tip.

13. The tip (300) according to any of claims 1 to 11, wherein the tip (300) does not comprise a further outlet located on the concave side of the tip.

14. A vibrating scaler for use in dentistry, comprising a scaler handpiece (326) connected to a tip (300) according to any preceding claim, optionally wherein the scaler handpiece (326) is an ultrasonic scaler handpiece.

15. The vibrating scaler according to claim 14, further comprising a coolant reservoir connected to the scaler handpiece, the coolant reservoir comprising a coolant comprising glycerine.

16. The vibrating scaler according to claim 15, wherein the coolant comprises glycerine and water, and optionally a thickening agent selected from gums optionally selected from gum arabic, gum tragacanth, guar gum and locust bean gum, pectin, agar-agar, alginic acid, alginate salts, carrageenan, gelatin, hydroxyethyl cellulose, methyl cellulose, carboxymethyl cellulose (CMC), polyacrylic acid (PAA) and mixtures thereof.

## Patentansprüche

1. Spitze (300) für einen Vibrationszahnsteinentferner zur Verwendung in der Zahnmedizin, wobei die Spitze Folgendes umfasst:
einen proximalen Einlass zum Aufnehmen eines Kühlmittels;
einen distalen Arbeitsabschnitt (304), der in Vibration versetzt wird, um das Zahnsteinentfernen zu unterstützen; und
einen Auslass (312) zum Abgeben von Kühlmittel, das über den Einlass empfangen wird, um den Arbeitsabschnitt (304) zu kühlen,
wobei der Arbeitsabschnitt (304) eine konkave Seite und eine konvexe Seite der Spitze definiert, **dadurch gekennzeichnet, dass** sich der Auslass (312) auf der konvexen Seite der Spitze befindet.

2. Spitze (300) nach Anspruch 1, wobei sich der Auslass (312) proximal zu dem Arbeitsabschnitt (304) und distal zu dem Einlass befindet.

3. Spitze (300) nach Anspruch 1 oder Anspruch 2, wobei der Auslass (312) abgeschrägt oder abgefast ist, um Kühlmittel, das von dem Auslass (312) abgegeben wird, in eine distale Richtung auf der konvexen Seite der Spitze zu lenken.

4. Spitze (300) nach einem vorhergehenden Anspruch, wobei der Arbeitsabschnitt (304) eine Nut (314) zum Lenken von Kühlmittel, das von dem Auslass (312) abgegeben wird, in eine distale Richtung auf der konvexen Seite der Spitze umfasst.

5. Spitze (300) nach einem vorhergehenden Anspruch, ferner umfassend einen proximalen Verbindungsabschnitt (302) zum Verbinden der Spitze (300) mit einem Zahnsteinentfernerhandstück (326), wobei sich der Arbeitsabschnitt (304) distal von dem Verbindungsabschnitt (302) erstreckt.

6. Spitze (300) nach Anspruch 5, wobei der Verbindungsabschnitt (302) ein Körpersegment (308), vorzugsweise mit einem größeren Querschnitt als der Arbeitsabschnitt (304), und ein Absatzsegment (310), das das Körpersegment (308) mit dem Arbeitsabschnitt (304) verbindet, umfasst, wobei sich der Arbeitsabschnitt (304) distal von dem Absatzsegment (310) erstreckt, wobei sich der Auslass (312) optional an dem Absatzsegment (310) des Verbindungsabschnitts (302) befindet.

7. Spitze (300) nach Anspruch 5 oder Anspruch 6, wobei der Verbindungsabschnitt (302) eine Längsachse umfasst, die sich von einem proximalen Ende des Verbindungsabschnitts zu einem distalen Ende des Verbindungsabschnitts erstreckt, wobei mindestens ein Teil des Arbeitsabschnitts (304) von der Längsachse des Verbindungsabschnitts divergiert, um die konkave Seite und die konvexe Seite der Vorrichtung zu definieren.

8. Spitze (300) nach einem der Ansprüche 5 bis 7, wobei sich der Einlass an dem Verbindungsabschnitt (302), vorzugsweise an einer proximalen Fläche des Verbindungsabschnitts, befindet.

9. Spitze (300) nach Anspruch 8, wobei der Verbindungsabschnitt (302) eine Schnittstelle (306) zum Fixieren und Verbinden der Spitze mit einem Zahnsteinentfernerhandstück (326) umfasst, wobei die Schnittstelle (306) den Einlass umfasst und ferner eine Befestigung zum Befestigen des Verbindungsabschnitts (302) an dem Handstück (326) umfasst, um Vibrationen davon aufzunehmen.

10. Spitze (300) nach einem der Ansprüche 5 bis 9, wobei der Verbindungsabschnitt (302) einstückig mit dem Arbeitsabschnitt (304) der Spitze ist.

11. Spitze (300) nach einem vorhergehenden Anspruch, wobei der Arbeitsabschnitt (304) ein bogenförmiges Segment und ein im Wesentlichen lineares Segment umfasst, das sich distal von dem bogenförmigen Segment erstreckt, wobei sich das bogenförmige Segment des Arbeitsabschnitts optional distal von dem Absatzsegment (310) des Verbindungsabschnitts (302) erstreckt.

12. Spitze (300) nach einem vorhergehenden Anspruch, ferner umfassend einen weiteren Auslass (316), wobei sich der weitere Auslass (316) auf der konkaven Seite der Spitze befindet.

13. Spitze (300) nach einem der Ansprüche 1 bis 11, wobei die Spitze (300) keinen weiteren Auslass umfasst, der sich auf der konkaven Seite der Spitze befindet.

14. Vibrationszahnsteinentferner zur Verwendung in der Zahnmedizin, umfassend ein Zahnsteinentfernerhandstück (326), das mit einer Spitze (300) nach einem vorhergehenden Anspruch verbunden ist, wobei das Zahnsteinentfernerhandstück (326) optional ein Ultraschall-Zahnsteinentfernerhandstück ist.

15. Vibrationszahnsteinentferner nach Anspruch 14, ferner umfassend einen Kühlmittelbehälter, der mit dem Zahnsteinentfernerhandstück verbunden ist, wobei der Kühlmittelbehälter ein Kühlmittel umfasst, das Glycerin umfasst.

16. Vibrationszahnsteinentferner nach Anspruch 15, wobei das Kühlmittel Glycerin und Wasser und optional ein Verdickungsmittel umfasst, ausgewählt aus Gummis, optional ausgewählt aus Gummi arabicum, Tragantgummi, Guargummi und Karobgummi, Pektin, Agar-Agar, Alginsäure, Alginatsalzen, Carrageen, Gelatine, Hydroxyethylcellulose, Methylcellulose, Carboxymethylcellulose (CMC), Polyacrylsäure (PAA) und Mischungen davon.

## Revendications

1. Pointe (300) pour détartreur vibrant destinée à être utilisée en dentisterie, la pointe comprenant :
une entrée proximale destinée à recevoir un réfrigérant ;
une partie de travail (304) distale destinée à être mise en vibration pour faciliter un détartrage ; et
une sortie (312) destinée à distribuer du réfrigérant reçu par l'intermédiaire de l'entrée pour refroidir la partie de travail (304),
dans laquelle la partie de travail (304) définit un côté concave et un côté convexe de la pointe, **caractérisée en ce que** la sortie (312) est située sur le côté convexe de la pointe.

2. Pointe (300) selon la revendication 1, dans laquelle la sortie (312) est située proximale par rapport à la partie de travail (304) et distale par rapport à l'entrée.

3. Pointe (300) selon la revendication 1 ou la revendication 2, dans laquelle la sortie (312) est biseautée ou chanfreinée pour canaliser du réfrigérant distribué depuis la sortie (312) dans une direction distale sur le côté convexe de la pointe.

4. Pointe (300) selon une quelconque revendication précédente, dans laquelle la partie de travail (304) comprend une rainure (314) destinée à canaliser du réfrigérant distribué depuis la sortie (312) dans une direction distale sur le côté convexe de la pointe.

5. Pointe (300) selon une quelconque revendication précédente, comprenant en outre une partie de liaison proximale (302) destinée à relier la pointe (300) à une pièce à main (326) de détartreur, la partie de travail (304) s'étendant de manière distale depuis la partie de liaison (302).

6. Pointe (300) selon la revendication 5, dans laquelle la partie de liaison (302) comprend un segment de corps (308), de préférence avec une section transversale plus grande que la partie de travail (304), et un segment d'épaulement (310) reliant le segment de corps (308) et la partie de travail (304), la partie de travail (304) s'étendant de manière distale depuis le segment d'épaulement (310), éventuellement dans laquelle la sortie (312) est située sur le segment d'épaulement (310) de la partie de liaison (302).

7. Pointe (300) selon la revendication 5 ou la revendication 6, dans laquelle la partie de liaison (302) comprend un axe longitudinal s'étendant depuis une extrémité proximale de la partie de liaison jusqu'à une extrémité distale de la partie de liaison, dans laquelle au moins une portion de la partie de travail (304) diverge de l'axe longitudinal de la partie de liaison pour définir le côté concave et le côté convexe du dispositif.

8. Pointe (300) selon l'une quelconque des revendications 5 à 7, dans laquelle l'entrée est située sur la partie de liaison (302), de préférence sur une face proximale de la partie de liaison.

9. Pointe (300) selon la revendication 8, dans laquelle la partie de liaison (302) comprend une interface (306) destinée à situer et à relier la pointe à une pièce à main (326) de détartreur, l'interface (306) comprenant l'entrée et comprenant en outre une fixation destinée à fixer la partie de liaison (302) à la pièce à main (326) pour en recevoir des vibrations.

10. Pointe (300) selon l'une quelconque des revendications 5 à 9, dans laquelle la partie de liaison (302) est solidaire de la partie de travail (304) de la pointe.

11. Pointe (300) selon une quelconque revendication précédente, dans laquelle la partie de travail (304) comprend un segment arqué et un segment sensiblement linéaire s'étendant de manière distale depuis le segment arqué, éventuellement dans laquelle le segment arqué de la partie de travail s'étend de manière distale depuis le segment d'épaulement (310) de la partie de liaison (302).

12. Pointe (300) selon une quelconque revendication précédente, comprenant en outre une sortie supplémentaire (316), la sortie supplémentaire (316) étant située sur le côté concave de la pointe.

13. Pointe (300) selon l'une quelconque des revendications 1 à 11, dans laquelle la pointe (300) ne comprend pas de sortie supplémentaire située sur le côté concave de la pointe.

14. Détartreur vibrant destiné à être utilisé en dentisterie, comprenant une pièce à main (326) de détartreur reliée à une pointe (300) selon une quelconque revendication précédente, éventuellement dans lequel la pièce à main (326) de détartreur est une pièce à main de détartreur à ultrasons.

15. Détartreur vibrant selon la revendication 14, comprenant en outre un réservoir de réfrigérant relié à la pièce à main de détartreur, le réservoir de réfrigérant comprenant un réfrigérant comprenant de la glycérine.

16. Détartrant vibrant selon la revendication 15, dans lequel le réfrigérant comprend de la glycérine et de l'eau, et éventuellement un agent épaississant choisi parmi des gommes éventuellement choisies parmi la gomme arabique, la gomme adragante, la gomme de guar et la gomme de caroube, la pectine, l'agar-agar, l'acide alginique, les sels d'alginate, le carraghénane, la gélatine, l'hydroxyéthylcellulose, la méthylcellulose, la carboxyméthylcellulose (CMC), l'acide polyacrylique (PAA) et leurs mélanges.
